Europäisches Patentamt

European Patent Office

Office européen des brevets

(11) Publication number: **0 227 446 B1**

# EUROPEAN PATENT SPECIFICATION

(45) Date of publication of patent specification: **22.01.92**  (51) Int. Cl.5: **G11B 15/68**

(21) Application number: **86309938.8**

(22) Date of filing: **18.12.86**

(54) **An automatic tape cassette loading device.**

(30) Priority: **20.12.85 JP 287271/85**

(43) Date of publication of application:
**01.07.87 Bulletin 87/27**

(45) Publication of the grant of the patent:
**22.01.92 Bulletin 92/04**

(84) Designated Contracting States:
**AT DE FR GB NL**

(56) References cited:
**EP-A- 0 145 268**
**US-A- 3 715 040**

**PATENT ABSTRACTS OF JAPAN, vol. 5, no. 202 (P-95)[874], 22nd December 1981; & JP-A-56 124 160 (NIPPON FUAIRINGU SEIZOU K.K.) 29-09-81**

**RESEARCH DISCLOSURE, no. 242, June 1984, page 273, Havant, Hampshire, GB; J. MEULE-MANS: "Cartridge library system"**

**SMPTE JOURNAL, vol. 88, no. 4, April 1979, pages 221-223, Scarsdale, US; K. KAZAMA et al.: "Automatic storage and retrieval of videotaped programs"**

(73) Proprietor: **SONY CORPORATION**
**7-35 Kitashinagawa 6-Chome Shinagawa-ku Tokyo 141(JP)**

(72) Inventor: **Nonaka, Wataru C/o Patents Division Sony Corporation 6-7-35 Kitashinagawa Shinagawa-ku Tokyo 141(JP)**
Inventor: **Saiki, Junichi C/o Patents Division Sony Corporation 6-7-35 Kitashinagawa Shinagawa-ku Tokyo 141(JP)**
Inventor: **Ohtsuka, Takashi C/o Patents Division Sony Corporation 6-7-35 Kitashinagawa Shinagawa-ku Tokyo 141(JP)**
Inventor: **Moriya, Yoshinari C/o Patents Division Sony Corporation 6-7-35 Kitashinagawa Shinagawa-ku Tokyo 141(JP)**

(74) Representative: **Purvis, William Michael Cameron et al**
**D. Young & Co. 10 Staple Inn London WC1V 7RD(GB)**

Rank Xerox (UK) Business Services

## Description

The invention relates to an automatic tape cassette loading device.

Such a device can be used for sequential and selective loading of a large number of tape cassettes into video tape recorders operable in at least the reproducing mode with a view to achieving continuous video reproduction for an extended period of time.

It has been previously proposed in a broadcasting station to provide an automatic cassette loading device in which a large number of tape cassettes are automatically selectively loaded in sequence into a video tape recorder, hereinafter abbreviated to VTR, in order to perform a continuous video reproducing and/or video recording for an extended time.

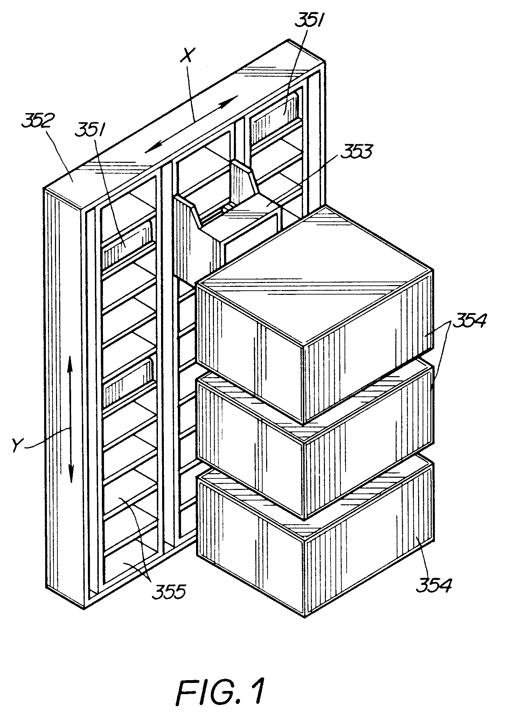

A previously proposed automatic cassette loading device of this kind as shown in Figures 1, 2 and 3 of the accompanying drawings, comprises a vertical cassette storage rack 352 containing a large number of tape cassettes 351. At the rear of the cassette storage rack 352 is disposed a cassette transfer unit 353, and at the rear of the unit 353 are arranged, in vertical tiers, a plurality of VTRs 354 each operable in at least the reproducing mode. The cassette storage rack 352 is formed by cassette storing shelf sections 355 for storing the tape cassettes 351 in vertical tiers and horizontal rows. The cassette transfer unit 353 is designed to be moved along these numerous cassette storing shelf sections 355 between the cassette storage rack 352 and the VTRs 354 in the vertical direction (indicated by an arrow Y) or in the horizontal direction (indicated by an arrow X).

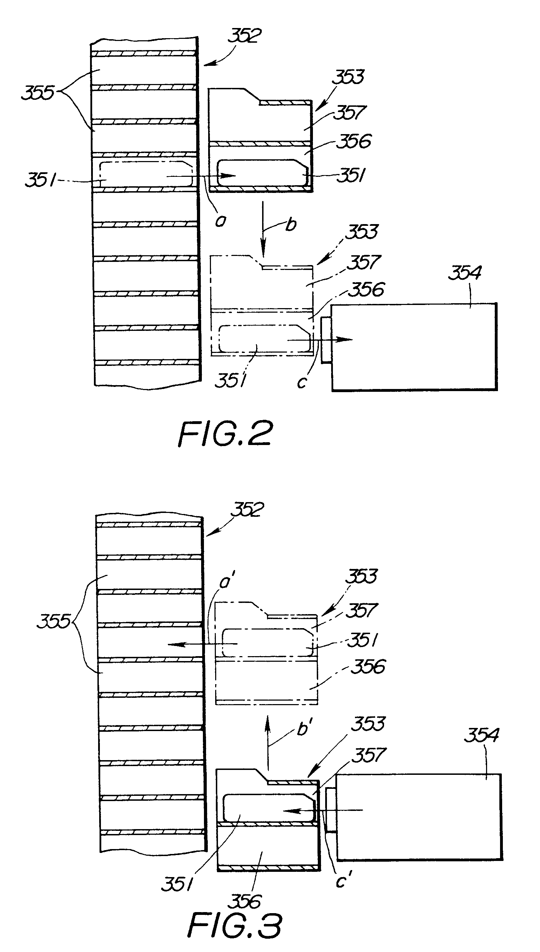

As shown in Figures 2 and 3, the cassette transfer unit 353 has a lower cassette transfer passage 356 and an upper cassette transfer passage 357. During loading of a cassette into a VTR 354, a tape cassette 351 is charged into the transfer passage 356 of the transfer unit 353 from within a selected cassette storing shelf section 352 in the direction of arrow a, as shown in Figure 2. The cassette transfer unit 353 is then moved in the direction of arrow b to a determined VTR 354, and the tape cassette 351 is then discharged in the direction of arrow c so as to be loaded from within the transfer passage 356 into the aligned VTR 354. When taking the cassette out of the VTR 354, the tape cassette 351 is fed in the direction of arrow c' (Figure 3) from the VTR 354 into the other, upper cassette transfer passage 357 of the cassette transfer unit 353, and the cassette transfer unit 353 is then moved in the direction of arrow b' to the original cassette storing shelf section 355 of the cassette storage rack 352, whereupon the tape cassette 351 is returned in the direction of arrow a' from the cassette transfer passage 357 into the original cassette storing shelf section 355, as shown in Figure 3.

In the above described conventional automatic cassette loading device, the cassette storage rack 352 for storing the tape cassettes 351, the cassette transfer unit 353 and the VTRs 354 arranged in a plurality of tiers, are grouped together into a single device. For this reason, it is necessary to increase the size of the cassette storage rack 352 if it is desired to increase the storable number of tape cassettes 351.

However, if the size of the cassette storage rack 352 is increased to increase the storable number of tape cassettes 351, a prolonged operating time is required for effecting the operations incident to exchanging the tape cassette disposed in each VTR. More particularly, when the size of the rack 352 is increased, increased times are required for seeking out a specified cassette 351 in the rack 352, loading the cassette into a VTR 354, and returning cassettes from other VTRs to the respective shelf sections 355 of the rack 352. The result is that it becomes difficult to achieve continuous or uninterrupted video reproduction by using a plurality of VTRs 354. More particularly, since the VTRs 354 are used at broadcasting stations by switching from one to another of the VTRs 354 at intervals comprised of tens of seconds, it becomes impossible to effect continuous video reproduction when the operating time for exchanging the cassettes in such VTRs is prolonged.

In addition, when the size of the cassette storage rack 352 is increased, the overall device is enlarged in size, so that difficulties are presented in its transportation and installation. Further, the previously proposed device is not adaptable to being arranged in block form for assembly of the several blocks at the site of eventual use.

Patent Specification US-A-3 715 040 discloses a plurality of bins which can be stacked in rows and columns and each of which includes plurality of tape reels, each in its own storage box. Each bin has a bridge therein which is movable along the reels to reach a selected one which it then extracts and removes from its box. The box is returned to its storage position and the reel is carried to the end of the bin by a gripping and transfer device on the bridge and is transferred to a conveyor which takes the reel to a point of use adjacent a tape transport arrangement.

RESEARCH DISCLOSURE of June 1984 number 242 page 273 "Cartridge Library System" discloses two banks of magazine containers with an aisle therebetween and a picking mechanism movable in the aisle and controlled by a library control system to extract cartridges stacked in the magazine containers and transport them to a media drive unit where they are placed in a queue for recording purposes by the media drive unit. After use the media drive unit returns the cartridge to its storage area. Cartridge access areas can be provided in the library system for entering selected cartridges for specific purposes.

Patent Specification EP-A-0 145 268 discloses a signal recording and reproducing system comprising a bank of receiving compartments for storing tape cassettes, a stack of recording and/or reproducing apparatus and cassette transporting apparatus movable between the bank of storage compartments and the recording and reproducing apparatus and effective to take tape cassettes from storage compartments, transport them to the recording and reproducing apparatus and load them thereinto and return them to their storage compartments after use.

According to the invention there is provided an automatic tape cassette loading device having a plurality of cassette storage shelf blocks arranged in adjoining side-by-side relation and each including a plurality of cassette storage compartments to contain respective tape cassettes; cassette transfer devices each associated with one of the cassette storage shelf blocks selectively to insert and remove a tape cassette in and from the cassette storage compartments of the respective cassette storage shelf block and to transfer each removed tape cassette within a range corresponding to the extent of the respective cassette storage shelf block; a VTR housing block mounted adjacent an end of the side-by-side arrangement of the cassette storage shelf blocks and containing at least one VTR at least to reproduce signals recorded in a tape cassette delivered thereto from one of the cassette storage shelf blocks,a cassette delivery unit provided between each two adjoining side-by-side cassette storage shelf blocks and operative to deliver a tape cassette from one to another of the cassette transfer devices associated with said adjoining cassette storage shelf blocks; characterised in that the cassette delivery unit includes feed table means shiftable laterally between first and second positions situated within the associated cassette storage shelf blocks, respectively, in each of which positions the feed table means are operative to receive and to discharge a tape cassette and with the first position substantially occupying the position of one of the cassette storage compartments in a first one of said adjoining cassette storage shelf blocks and the second position substantially occupying the position of one of the cassette storage compartments in a second one of said adjoining cassette storage shelf blocks adjacent to said first one;and an additional cassette delivery unit is provided between the VTR and the cassette storage shelf block adjacent thereto and is operative to deliver a tape cassette between said adjacent cassette storage shelf block and the VTR.

Such a device can have increased tape cassette storage capacity without prolonging the time required for exchanging the cassette in a VTR, so that video reproducing and/or recording operations of short durations can be effected without interruption by means of a relatively smaller number of VTRs.

Cassette storage shelves of the device can be arranged in block form so that the number of cassette storage shelves can be optionally increased or reduced merely by increasing or decreasing the number of blocks to permit any desired number of tape cassettes to be stored in one storage rack.

In such an automatic tape cassette selecting and loading device insertion or removal and transfer of the tape cassettes can be carried out by parallel operations for the several cassette storage shelf blocks, respectively, with tape cassette deliveries being effected between the adjacent cassette storage shelf blocks and between the VTR housing block and the adjacent cassette storage shelf block. As a result, even when the tape cassette storage capacity is greatly increased, it is possible to effect the necessary operations for insertion and removal of the tape cassettes into and out of the cassette storage compartments in a manner to permit video reproduction and/or recording to be effected for short durations consecutively on a relatively small number of VTRs. Further, since the cassette storage sheleves are arranged in block form, the numbers of the shelves can be increased or decreased by adding or subtracting blocks, as desired, while the overall arrangement of the device otherwise remains unchanged.

The invention is diagrammatically illustrated by way of example with reference to the accompanying drawings, in which:-

Figure 1 is a perspective view showing an automatic tape cassette loading device of previously proposed kind;

Figures 2 and 3 are fragmentary, sectional schematic views respectively illustrating the removal of a tape cassette from a storage compartment and the loading of such cassette into a VTR by the device of Figure 1, and the unloading of the cassette from the VTR and its return to the original storage compartment;

Figure 4 is a schematic plan view showing the arrangement of an automatic tape cassette loading device according to an embodiment of the invention;

Figure 5 is a schematic front elevational view of the device of Figure 4;

Figures 6 and 7 are schematic sectional views to which reference will be made in explaining the operation of a cassette transfer device included in the arrangement of Figures 4 and 5;

Figure 8 is a perspective view of a drive mechanism for the cassette transfer device of Figures 6 and 7;

Figure 9 is a detailed perspective view, which is partly broken away and in section, for showing a portion of the drive mechanism of Figure 8;

Figure 10 is a sectional view taken on line X-X of Figure 9;

Figure 11 is a perspective view showing details of a horizontal drive assembly included in the drive mechanism of Figure 8;

Figure 12 is a sectional view taken on line XII-XII of Figure 11;

Figure 13 is a side elevational view, partly broken away and in section, and showing details of cassette storage compartments and respective cassette push-out devices included in a device according to this invention;

Figure 14 is a front elevational view of the structure shown in Figure 13;

Figure 15 is a plan view of one of the storage compartments and the associated mechanisms as viewed in the direction of arrows XV-XV of Figure 13;

Figure 16 is a view similar to that of Figure 15, but showing the compartment and associated mechanisms in the condition thereof when a cassette is stored in the compartment;

Figure 17 is an exploded perspective view of elements included in a push-out device associated with each of the storage compartments;

Figures 18A-18E are detailed sectional views to which reference will be made in explaining the operation of the push-out device associated with each storage compartment;

Figure 19 is a side elevational view, partly in section, and illustrating manual removal of a tape cassette from a storage compartment;

Figure 20 is a front elevational view of a cassette transfer device associated with each cassette storage shelf block in the automatic tape cassette loading device according to the invention;

Figure 21 is a side elevational view of the cassette transfer device as viewed in the direction of arrows XXI-XXI of Figure 20;

Figure 22 is a side elevational view as viewed in the direction of arrows XXII-XXII of Figure 20;

Figure 23 is a sectional view taken on line XXIII-XXIII of Figure 21;

Figures 24A and 24B are side views similar to that of Figure 21, but illustrating the operation of the cassette transfer device in returning a cassette to a cassette storage compartment;

Figure 25 is a top plan view of the cassette transfer device as viewed in the direction of arrows XXV-XXV of Figure 24A;

Figure 26 is a front elevational view of a cassette delivery unit included in a device according to this invention;

Figure 27 is a top plan view of a cassette feed table included in the delivery unit of Figure 26 and which is shown in the condition thereof for the insertion or discharge of a tape cassette;

Figure 28 is a side elevational view of the cassette feed table of Figure 27;

Figure 29 is a plan view similar to that of Figure 27, but showing the cassette feed table in the condition thereof with a tape cassette situated on the table;

Figure 30 is a side view of the cassette feed table in the condition of Figure 29;

Figure 31 is a front elevational view of an automatic cassette input and output device associated with each VTR in a device according to this invention;

Figure 32 is an enlarged, fragmentary perspective view of an automatic roll lifting mechanism included in the device of Figure 31;

Figure 33 is a side elevational view of the device shown in Figure 31 as viewed in the direction of arrows XXXIII-XXXIII, and to which reference will be made in explaining the operation for automatic cassette delivery into a VTR;

Figure 34 is a view similar to that of Figure 33, but showing another stage of the operation; and

Figure 35 is a sectional view taken on line XXXV-XXXV of Figure 31.

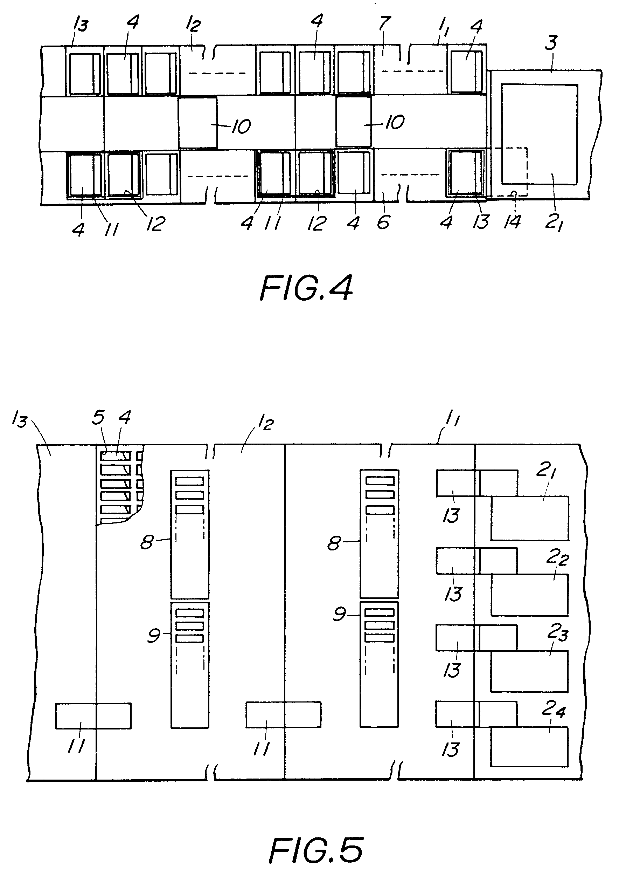

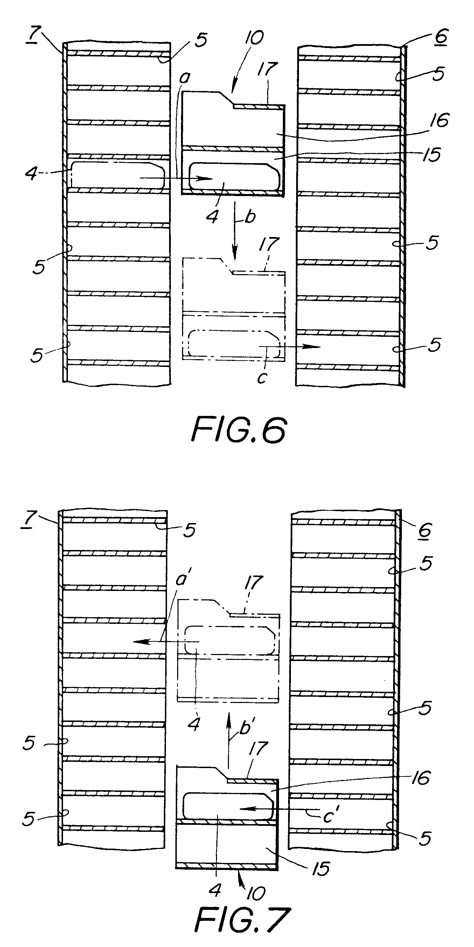

Referring to the drawings and firstly to Figures 4 and 5, an automatic tape cassette loading device comprises a plurality of separate cassette storage shelf blocks $1_1$, $1_2$, $1_3$,... placed side-by-side or in tandem, and a VTR housing block 3 to contain a number of, herein four, VTRs $2_1$,$2_2$,$2_3$,$2_4$, capable of operating in at least a reproducing mode and arranged vertically one upon another.

Each of the cassette storage shelf blocks $1_1$, $1_2$, $1_3$,... includes a first cassette storage shelf portion 6 and a second cassette storage shelf portion 7 arranged in facing relation to each other on a foundation or base with a predetermined gap or aisle therebetween. Each of the shelf portions 6 and 7 includes a matrix of horizontal rows and vertical columns of cassette storage compartments 5 for storing the tape cassettes 4.

Approximately centrally of the front side of the first cassette storage shelf portion 6 of each of the cassette storage shelf blocks $1_1$, $1_2$, $1_3$, there are provided an upper vertically elongate cassette reception opening 8 through which the tape cassettes 4 can be manually inserted into compartments 5 aligned therewith, and a lower vertically elongate cassette take-out opening 9 whereby the tape cassettes 4 earlier stored within the cassette storage shelf portions 6, 7 and now being out of use can be removed from compartments aligned with the opening 9.

The cassette storage shelf blocks $1_1$, $1_2$, $1_3$,... are each provided with a cassette transfer device 10 which is arranged in the gap or aisle between the respective first and second cassette storage shelf portions 6 and 7. Each transfer device 10 can introduce and take out tape cassettes into and from the cassette storage compartments 5 of the cassette storage shelf portions 6, 7 and also transfer the thus introduced or taken out tape cassettes 4 vertically or transversely within the respective one of the cassette storage shelf blocks $1_1$, $1_2$, $1_3$.

Between each adjacent two of the cassette storage shelf blocks $1_1$, $1_2$, $1_3$, for example, between the blocks $1_1$ and $1_2$ and between the blocks $1_2$ and $1_3$, there is provided a cassette delivery unit 11 constructed as later described and to effect delivery of tape cassettes transferred by a cassette transfer device 10 within one of the storage shelf blocks $1_1$, $1_2$, $1_3$,... to an adjacent one of the storage shelf blocks $1_1$, $1_2$, $1_3$,... . Each such cassette delivery unit 11 is mounted in a storage section 12 formed by cutting away parts of cassette sotrage compartments 5 of mutually adjoining first storage shelf portions 6 of storage shelf blocks $1_1$, $1_2$, $1_3$.

The VTR housing block 3 is placed next to the first cassette storage shelf block $1_1$, that is, at the right-hand end of the series of cassette storage shelf blocks $1_1$, $1_2$, $1_3$ shown arranged side-by-side in Figure 4. This VTR housing block 33 is also constructed as a block separate from the cassette storage shelf blocks $1_1$, $1_2$, $1_3$,... . The VTR housing block 3 and the first cassette storage shelf block $1_1$ adjacent thereto are also provided with cassette delivery units 13 similar to the delivery units 11 described above and each suited to deliver a tape cassette 4 transferred thereto by the cassette transfer device 10 associated with the cassette storage shelf block $1_1$ towards the respective VTR $2_1$, $2_2$, $2_3$, $2_4$,... in the adjacent VTR housing block 3, or to deliver a tape cassette 4 discharged from the respective VTR in the housing block 3 towards the first cassette storage shelf block $1_1$. The cassette delivery units 13 are each mounted in a storage section 14 formed in parts of the cassette storage compartments 5 of the first shelf portion 6 of the shelf block $1_1$ and in parts of the VTR housing block 3 adjacent to the respective VTR. These cassette delivery units 13 are operatively associated with automatic cassette loading and discharging devices situated within the VTR housing block 3, as later described, and can automatically charge or discharge the tape cassettes 4 between the cassette delivery units 13 and the respective VTRs $2_1$, $2_2$, $2_3$, $2_4$,... .

The specific structure of each cassette transfer device 10 included in the automatic tape cassette loading device will now be explained with reference to Figures 6-12.

The cassette transfer device 10 is shown to include a cassette transfer member or housing 17 provided with a lower cassette transfer passage 15 and an upper cassette transfer passage 16, and a driving device for effecting vertical and transverse movements of the cassette transfer member 17. The basic operation of the transfer device 10 is as follows: For transferring a tape cassette 4 from a selected cassette storage compartment 5, for example, in the shelf portion 7, to a selected compartment 5 in the shelf portion 6, the tape cassette 4 from such compartment 5 in the shelf portion 7 is introduced in the direction of arrow a (Figure 6) into the lower cassette transfer passage 15 of the cassette transfer member 17. The member 17 is then transferred laterally and vertically to align its passage 15 with the selected compartment 5 in the shelf portion 6, and the tape cassette 4 is introduced into the selected compartment 5 out of the transfer passage 15 in the direction of arrow c (Figure 6). When returning a tape cassette to its original storage place, the tape cassette 4 is introduced in the direction of arrow c' (Figure 7) into the upper cassette transfer passage 16 of the transfer member 17 from the compartment in the shelf portion 6. The transfer member 17 is then transferred laterally and vertically to the original cassette storage compartment 5 of the shelf portion 7 and the tape cassette 4 is then transferred in the direction of arrow a' (Figure 7) out of the cassette transfer passage 16 so as to be stored in the original cassette storage compartment 5 in the shelf portion 7. The cassette transfer device 10 is similarly employed for transferring a cassette 4 between a compartment 5 of a storage shelf portion 6 or 7 and a delivery unit 11 or 13.

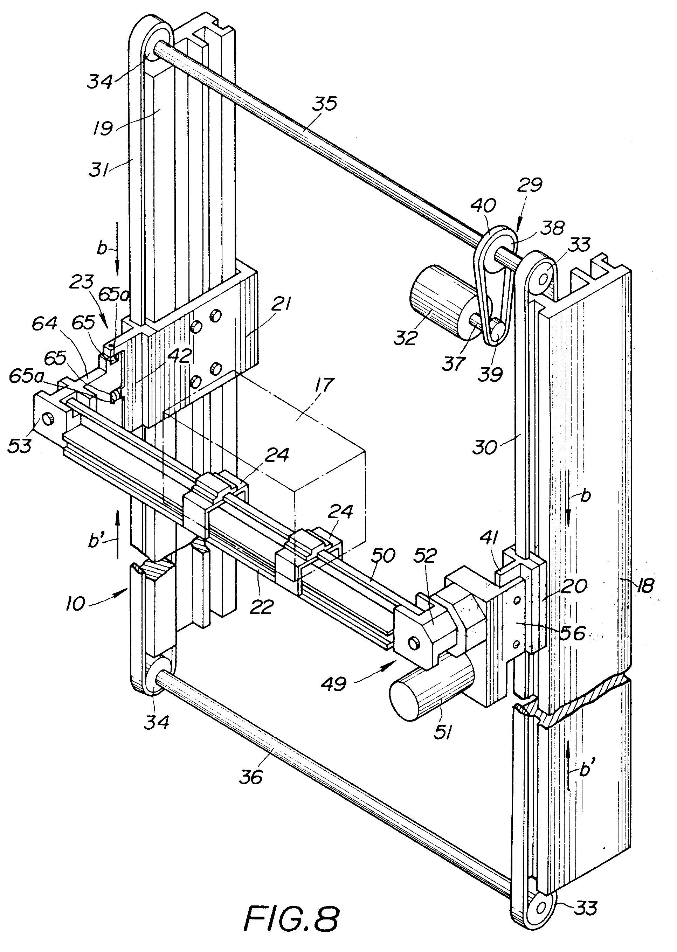

The transfer driving device for moving the transfer member 17 in both the vertical and transverse or lateral directions will now be explained in detail. As shown in Figure 8, the driving device includes a pair of transversely spaced apart vertical guide rails 18 and 19 on which a pair of vertically slidable slide units 20 and 21, respectively, are mounted. A horizontal guide rail 22 extends between the vertical guide rails 18 and 19 and has one end fixedly connected to the slide unit 20 while its other end is connected to the slide unit 21 by a universal joint 23 which is hereinafter described in detail. The cassette transfer member 17 is mounted on top of a pair of sliding elements 24 which are slidable transversely on the horizontal guide rail 22.

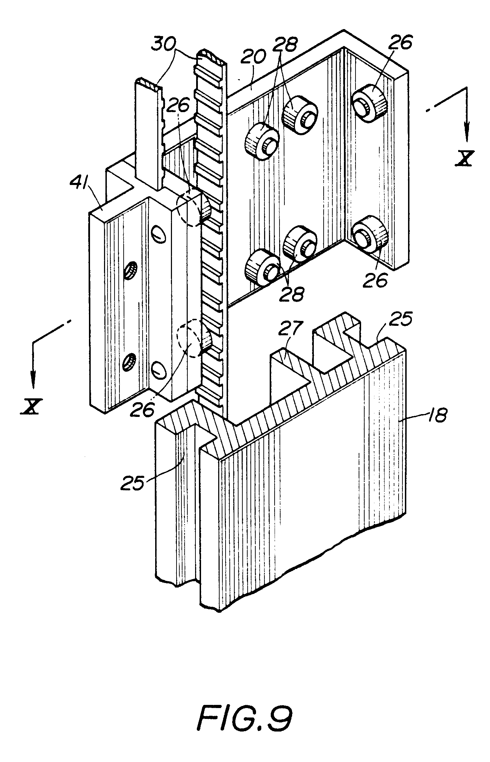

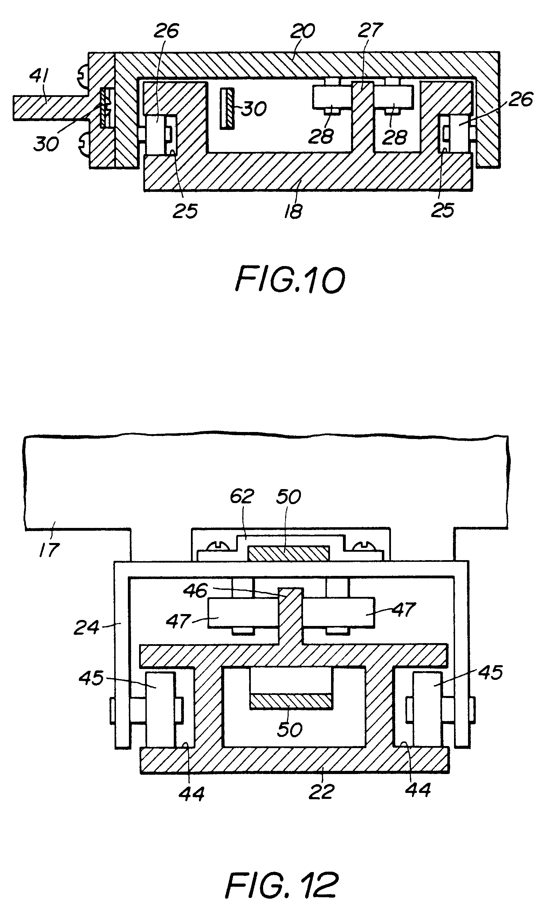

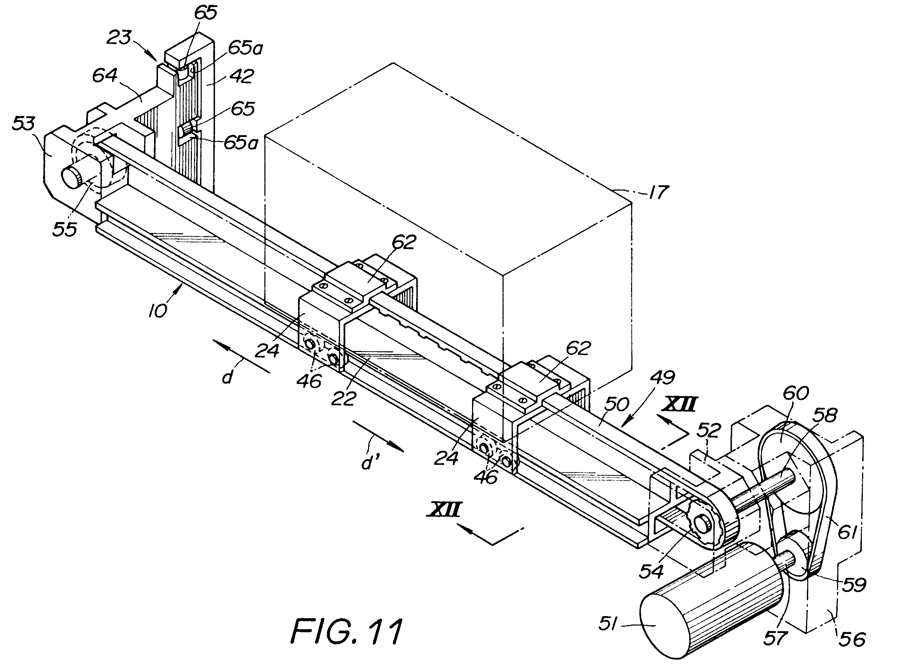

The guide rails 18 and 19 and the sliding units 20 and 21 are constructed as substantially identical mirror images of each other. As shown in Figures 9 and 10 with respect to the rail 18 and the sliding unit 20, upper and lower paired guide rolls 26 are mounted for rotation at the forward and rear ends of the sliding unit 20 and are engaged within vertically extending guide grooves 25 formed in the front and rear end faces of the vertically extending guide rail 18. Front and rear lateral faces of a vertically extending guide rib 27 directed laterally inward along the inner surface of the vertically extending guide rail 18 are sandwiched between upper and lower paired guide rolls 28 rotatably mounted on the sliding unit 20. Thus, the sliding units 20 and 21 are smoothly slidable along the guide grooves 25 and the vertical guide ribs 27 of the rails 18 and 19.

The sliding units 20 and 21 are moved vertically in synchronism with each other along the vertically extending guide rails 18 and 19 by a vertical driving unit 29 which, as shown in Figure 8, includes left and right paired timing belts 30 and 31 extending vertically adjacent the guide rails 18 and 19 respectively, and a driving motor 32 for driving the timing belts. The timing belts 30 and 31 extend between upper and lower paired pulleys 33 and 34, respectively, which are secured on upper and lower shafts 35 and 36 rotatably mounted at the upper and lower ends of the guide rails 18 and 19. A further timing belt 40 runs about pulleys 38 and 39 which respectively are secured to the upper rotary shaft 35 and to an output shaft 37 of the driving motor 32. The timing belts 30 and 31 are secured to the front end faces of the sliding units 20 and 21, respectively, by rail holders 41 and 42.

By forward and reverse operation of the driving motor 32, the timing belts 30 and 31 are driven simultaneously in the vertical directions as indicated by arrows b, b' in Figure 8 so that the guide rail 22 is made to undergo a vertical translatory movement through the sliding elements 20 and 21 to cause corresponding vertical movement of the cassette transfer member 17.

The front and rear longitudinal faces of the horizontally extending guide rail 22 are formed with paired horizontally extending guide grooves 44 in which are engaged forward and rear paired guide rolls 45 rotatably mounted at the forward and rear ends of the sliding elements 24, as shown in Figures 11 and 12. The front and rear lateral faces of a guide rib 46 directed upwardly and extending along the horizontally extending guide rail 22 are sandwiched between forward and rear paired guide rolls 47 rotatably mounted on the sliding elements 24 (Figure 12). Thus, the sliding elements 24 are guided by the rib 46 and the rolls 47 so as to be slidable smoothly along the horizontally extending guide rail 22.

The sliding elements 24 are moved transversely along the horizontally extending guide rail 22 by a horizontal driving unit 49 which, as shown in Figure 11, includes a timing belt 50 extending horizontally along the guide rail 22 and a driving electric motor 51. The timing belt 50 extends around left and right paired pulleys 54 and 55 rotatably disposed in pulley housings 52 and 53 secured to the opposite ends, respectively, of the horizontally extending guide rail 22. The driving motor 51 is mounted on a belt housing 56 secured to the pulley housing 52. The timing belt 50 is secured by belt retainers 62 to the upper surfaces of the sliding elements 24. A timing belt 61 runs around a pair of pulleys 59 and 60 respectively secured to a motor shaft 57 of the driving electric motor 51 and to a rotary shaft 58 connected with the pulley 54.

Hence, by forward and reverse operation of the driving motor 51, the timing belt 50 is driven through the timing belt 61 and the shaft 58 to move in the transverse directions indicated by the arrows d and d' in Figure 11 without slipping so that the cassette transfer member 17 is similarly moved transversely along the guide rail 22 by the sliding elements 24.

The motor shaft 37 of the driving motor 32, the rotary shaft 35, the motor shaft 57 of the driving motor 51 and the rotary shaft 58 are provided with respective position encoding devices for effecting address allocation, in the vertical and transverse, directions of the cassette transfer member 17 with respect to the cassette storage compartments 5 of the cassette storage portions 6 and 7 and with respect to the cassette delivery units 11 and 13.

As noted earlier, a universal joint 23 is provided between the sliding unit 21 and the adjacent end of the guide rail 22 and is constituted by a rail holder 64 secured to the pulley housing 53 and the roll holder 42 on the sliding unit 21 (Figure 11). Three rolls 65 are mounted for rotation on the roll holder 42 and engage in three respective grooves 65a provided in the rail holder 64.

By connecting the horizontal guide rail 22 to the sliding unit 21 by means of the universal joint 23, any change in the distance between the sliding units 20 and 21, caused by deviation from exact parallelism of the guide rails 18 and 19, experienced during the movement of the horizontally extending guide rail 22 along the guide rails 18 and 19 in the vertical direction may be accommodated by the freedom of movement in the transverse and rotational directions afforded by the universal joint 23. In this manner, any distortion of the sliding units 20 and 21 relative to the guide rails 18 and 19, caused by deviations from parallelism, with resultant binding or large sliding resistance may be prevented so that the sliding units 20 and 21 can slide smoothly and noiselessly along the vertically extending guide rails 18 and 19.

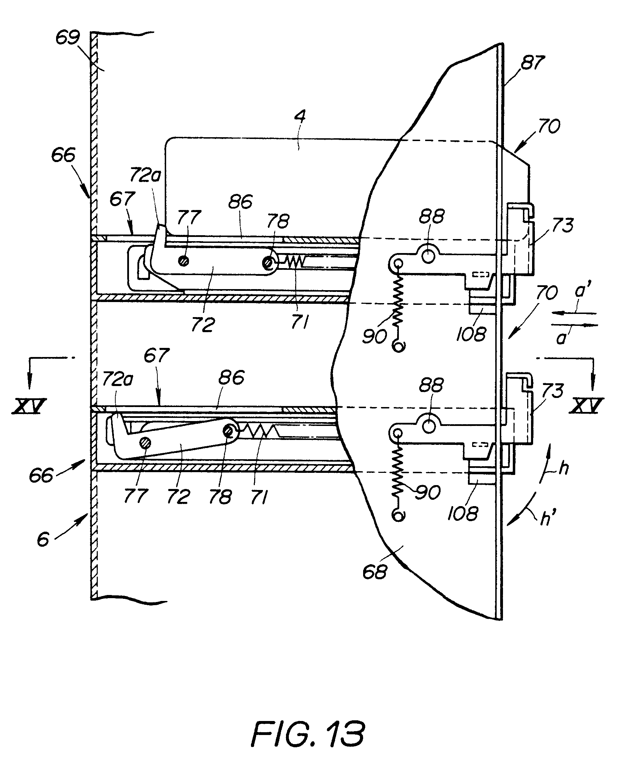

Each cassette storage compartment 5 of the first and second cassette storage shelf portions 6 and 7 is provided with a cassette push-out unit 66 which will be described with reference to Figures 13-17.

Each cassette storage compartment 5 is in the form of a parallelepipedic space defined by horizontally extending vertically spaced shelf plates 67 and vertically extending left and right side plates 68 and 69. Each cassette storage compartment 5 has an opening 70 for insertion and removal of a tape cassette and which faces toward the aisle or gap between the shelf portions 6 and 7, that is, towards the cassette transfer member 17.

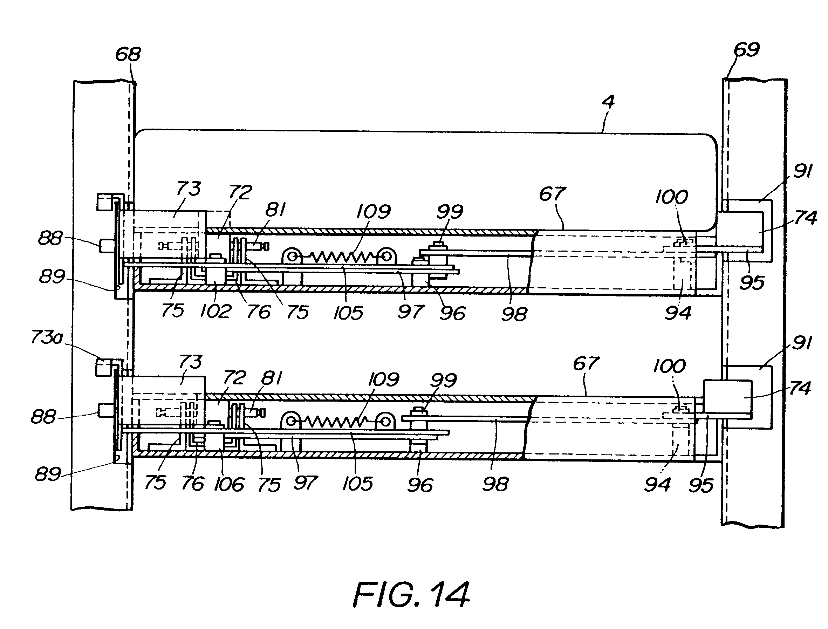

The cassette push-out unit 66 comprises a push-out member 72 biased by a pair of springs 71 in the direction of the arrow a in Figure 13 from a retracted or inoperative position within the respective compartment 5 towards an extended or operative position in the vicinity of the cassette insertion and removal opening 70, a stopper 73 provided adjacent the cassette insertion and removal opening 70, and a detection member 74 also adjacent the opening 70 of the cassette storage compartment 5 (Figure 14).

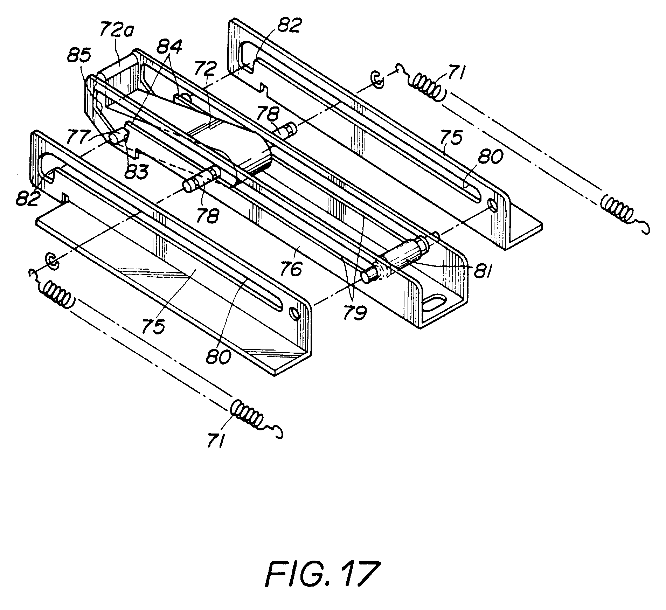

On the shelf plate 67 at the bottom of the compartment 5, a pair of slide guide plates 75 are secured parallel to each other along the left and right sides of the trajectory of the reciprocating movement of the push-out member 72, as shown in Figures 14-17. The push-out member 72 is slidably mounted within a slide plate 76 of channel-shaped cross-section which is slidably disposed between the slide guide plates 75. The push-out member 72 is L-shaped and elongate in its reciprocating direction so as to define an up-turned hook 72a at its end directed into the respective compartment 5. The push-out member 72 has a pair of slide pins 77 and 78 extending horizontally from its opposite sides at the opposite end portions of the member 72. The ends of the pins 77 and 78 slidably engage in left and right side pairs of guide slots 79 and 80 respectively formed in the slide plate 76 and in the slide plates 75 so that the push-out member 72 is slidable along the guide slots 79 and 80 (Figure 17).

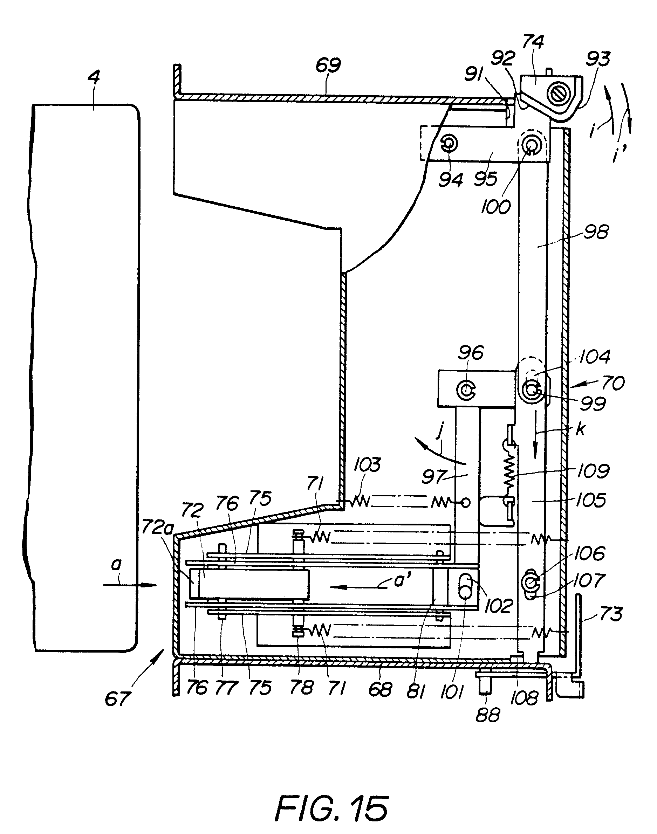

A guide pin 81 is installed ahead of the push-out member 72 between the forward end parts of the slide guide plates 75 and is slidably engaged in both the guide slots 79 of the slide plate 76. The push-out member 72 is biased forwardly or in the direction of arrow a in Figure 15 by the paired springs 71 which, at one end, are connected to the ends of the guide pin 78. The other or forward ends of the springs 71 are suitably anchored to a forward portion of the shelf 67. The guide slots 80 of the slide guide plates 75 are formed with lock portions 82 extending downwards at right angles at the ends of the guide grooves 80 remote from the opening 70. The corresponding end parts of the guide slots 79 of the slide plate 76 are similarly formed with downwardly directed locking portions 83. Each locking portion 83 has an undercut defined by a small projection 84, and the lower edge 85 of each locking portion 83 is inclined or extends obliquely upward towards the interior of the respective cassette storage compartment 5. The hook 72a of the push-out member 72 can project through an elongate opening 86 (Figure 13) in the shelf plate 67 so as to project thereabove.

The stopper 73 is substantially L-shaped, as shown in Figures 13-16, and is pivotally mounted on the side plate 68 for turning about a pin 88, as indicated by arrows h, h' in Figure 13. It will be noted that the stopper 73 can turn in a vertical plane within a slit 89 formed in a flange 87 extending along the edge of the side plate 68 bordering the opening 70. The stopper 73 is biased by a spring 90 so as to be turned in the direction of arrow h in Figure 13.

The detection member 74 is disposed within a cut-out 91 (Figure 14) formed in the other side plate 69 adjacent the opening 70, and the member 74 is formed with front and rear inclined edges 92 and 93 (Figure 15). The detection member 74 is mounted at one end of an L-shaped link 95 which is pivotally mounted at its other end on a pin 94 carried by the shelf plate 67 so that the detection member 74 may be pivoted in the transverse direction, as indicated by arrows i, i' in Figure 15. The opposite ends of a link 98 are respectively connected by pins 99 and 100 to the L-shaped link 95 and to one end of a pivotally mounted L-shaped lever 97. The other end of the L-shaped lever 97 is connected to the slide plate 76 by a pin 101 engaging in a laterally elongate opening 102 in the slide plate 76. The L-shaped lever 97 is urged by a spring 103 in the direction indicated by arrow j in Figure 15 so that the slide plate 76 is thereby biased in the direction indicated by arrow a' and the detection member 74 is also biased into the cassette storage section 5, that is, in the direction indicated by arrow i' in Figure 15. A stopper locking plate 105 has an elongate opening 104 at one end receiving the pin 99 of the L-shaped lever 97, and further has an elongate opening 107 receiving a guide pin 106 provided on the shelf plate 67. The end part of the stopper locking plate 105 remote from the pin 99 may project above the stopper 73 through a cut-out 108 provided in the side plate 68. The stopper locking plate 105 is biased by a spring 109 in the direction indicated by arrow k in Figure 15.

Insertion and removal of tape cassettes 4 into and out of the tape storage compartments 5 provided with push-out units 66 will now be described with reference to Figures 13-19.

A new tape cassette is inserted initially into one of the cassette storage compartments 5 communicating with the cassette reception opening 8 formed by partially cutting away the front side of the respective cassette storage compartments 5 provided in the first cassette storage shelf portion 6. The tape cassette 4 manually inserted into a cassette storage compartment 5 communicating with the cassette reception opening 8 may then be transferred to, and stored in a predetermined one of the cassette storage compartments 5 of the first and second cassette storage shelf portions 6, 7 by the operation of the respective cassette transfer device 10.

In removing a tape cassette 4 which has come out of use, that cassette 4 is first transferred by the respective cassette transfer device 10 to a cassette storage compartment 5 of the shelf portion 6 communicating with the cassette take-out opening 9, and then the cassette is manually removed from such compartment 5 through the opening 9.

The above generally described operations of inserting and removing tape cassettes 4 into and out of compartments 5 communicating with reception opening 8 and take-out opening 9, respectively, will now be described in greater detail.

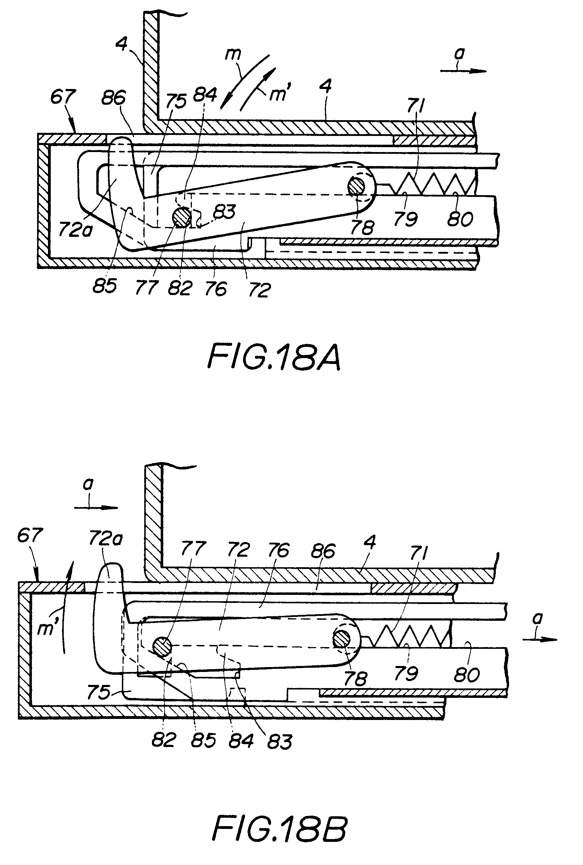

Before initiating the insertion of a tape cassette 4 into a compartment 5 communicating with the opening 8, the push-out member 72 of the respective cassette push-out unit 66 is locked in the retracted position shown in Figure 18A to which it has been shifted against the force of the springs 71. In such retracted position, the push-out member 72 has been rocked in the direction of arrow m, about the slide pin 78, and the other slide pin 77 is held under the small projection 84 and within the locking portions 82 and 83 of the guide slots 79 and 80. Thus, the hook 72a of the push-out member 72 is disposed below the lower surface of the compartment 5, as shown in Figure 18A. The stopper 73 biased by the spring 90 in the direction of arrow h in Figure 13 protrudes into the cassette insertion and removal opening 70, as shown in Figure 14. The detection member 74 biased by the spring 103 in the direction of arrow i' in Figure 15 intrudes into the cassette storage compartment 5. At this time, the leading end of the stopper locking plate 105 biased by the spring 109 in the direction of arrow k in Figure 15 abuts against the lateral side of the stopper 73. However, since the pin 99 of the L-shaped lever 97 is engaged within the elongate opening 104 of the stopper locking plate 105, the L-shaped lever 97 can be turned by the spring 103 in the direction of arrow j without limitation by the stopper locking plate 105 so that the detection member 74 intrudes into the cassette storage compartment 5 as shown in Figure 15.

Then, as shown in Figure 15, the tape cassette 4 is introduced horizontally into the compartment 5 through the cassette reception opening 8 in the direction of arrow a without any interference from the hook 72a of the push-out member 72.

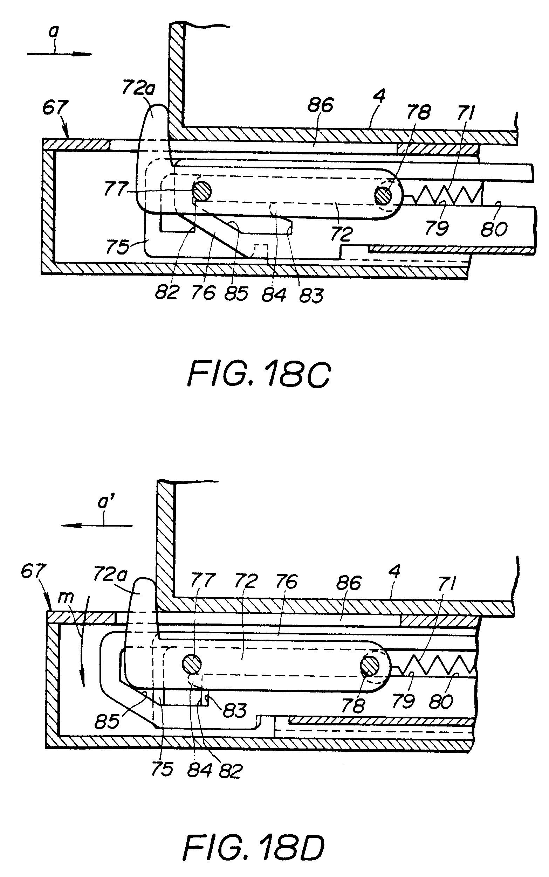

As the leading portion of the tape cassette thus introduced into a cassette storage compartment 5 in the direction of arrow a in Figure 15 approaches the stopper 73, the trailing part of the tape cassette 4 will pass over the hooked part 72a of the push-out member 72, as shown in Figure 18A. At such time, a corner of the leading portion of the tape cassette 4 rides against the inclined surface 92 of the detection member 74 and propels the detection member 74 laterally outward from the cassette storage compartment 5. This causes the L-shaped link 95 to be turned in the direction of arrow i of Figure 15 so that the link 98 turns the lever 97 against the force of the spring 103 to move the slide plate 76 in the direction of arrow a. When the slide plate 76 is moved in the direction of the arrow a of Figure 18A, the small projection 84 over the undercut of the locking portion 83 is disengaged from over the slide pin 77 thereby to release its locking action on the push-out member 72. Then, as shown in Figure 18B, the inclined edge 85 of the locking portion 83 of the slide plate 76 is thrust against the slide pin 77 in the direction of arrow a so that the pin 77 is displaced upwards in the direction of arrow m' of Figure 18B. As a result, the push-out member 72 is turned in the direction of arrow m' about the slide pin 78 so that its hook 72a is caused to protrude above the surface of the shelf plate 67 through the elongate opening 86. When the hook 72a is fully projected above shelf plate 67, the slide pin 77 is released from the locking portions 82 and 83 of the guide slots 79 and 80, as shown in Figure 18C.

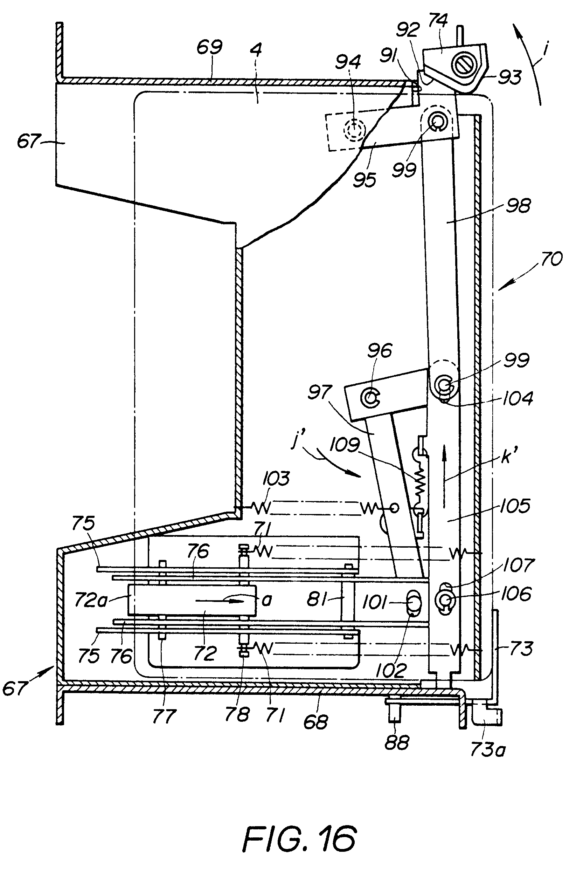

At that instant, the push-out member 72 is urged by the springs 71 from the retracted position of Figure 15 towards the opening 70, with the hook 72a of the push-out member 72 engaging and thrusting the tape cassette 4 in the direction of the arrow a, as shown in Figure 18C. As a result, the tape cassette 4 is automatically moved by the push-out member 72 in the direction of arrow a until it comes to a standstill with a corner of the leading part of the cassette in abutment with the stopper 73, as shown in Figure 16. The tape cassette 4 then continues to be maintained in this state. When the push-out member 72 is thus moved in the direction of arrow a, the slide pins 77, 78 are moved within the guide slots 79, 80 so that the push-out member 72 is moved horizontally.

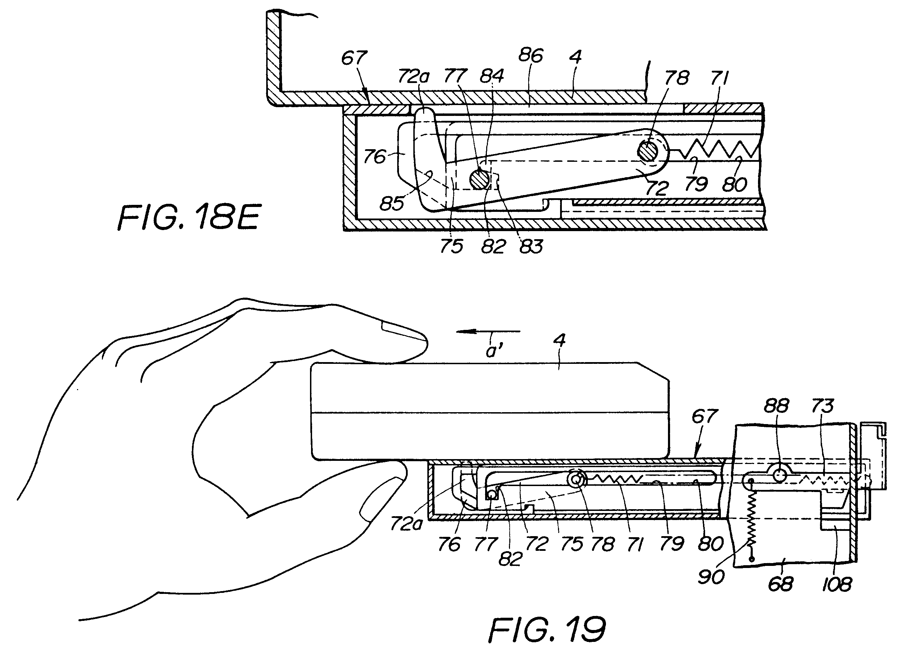

When a tape cassette 4 is to be removed or extracted from a cassette storage compartment 5 through the cassette removal or take-out opening 9, the tape cassette 4 is grasped manually at its rear part and pulled out in the direction of the arrow a' of Figure 19. At such time, the push-out member 72 is pushed back from the extended position shown in Figure 16 toward the retracted position shown in Figure 15 against the force of the springs 71 in a reversal of the operation described above for cassette insertion. More specifically, as the corner of the tape cassette 4 is disengaged from the detection member 74 in the course of cassette movement in the direction of arrow a' of Figure 15, the detection member 74 is free to be moved by the force of the spring 103 in the direction of arrow i' through the L-shaped lever 97, the link member 98 and the L-shaped link member 95. The slide plate 76 is also displaced by the force of the spring 103 in the direction of arrow a'. After having been thrust to its retracted position in the direction of arrow a' in Figure 18D, the push-out member 72 is turned in the direction of the arrow m about the slide pin 78 and then locked with the slide pin 77 moved out of the guide slots 79 and 80 into the locking portions 82 and 83 and being held therein by the projection 84. Thus, the hook 72a of the push-out member 72 is depressed through the elongate opening 86 into the interior of the shelf plate 67 so as to be disposed below the bottom surface or floor of the cassette storage compartment 5, as shown in Figure 18E. Finally, the manual withdrawal of the cassette 4 from the compartment 5 is completed, as shown in Figure 19.

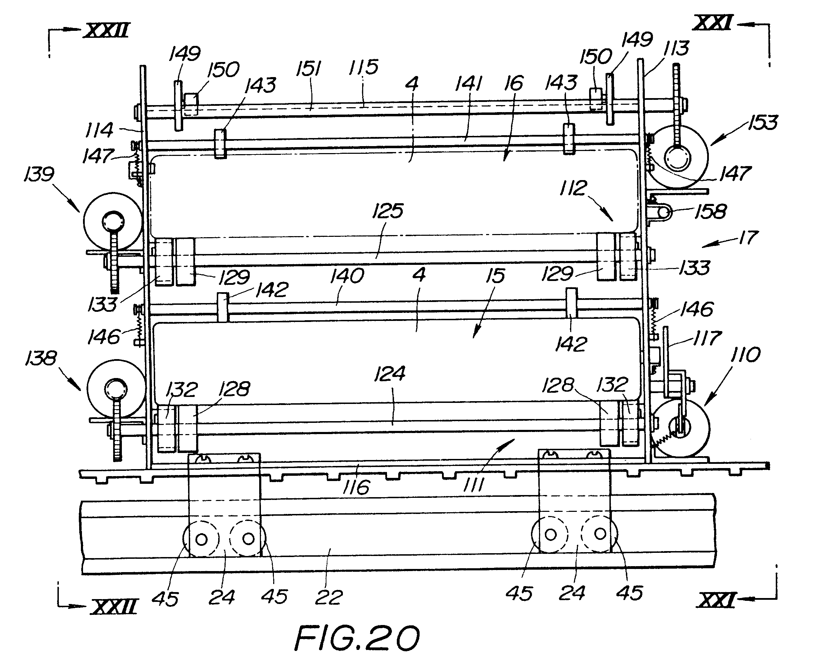

An actuating mechanism 110 for the cassette push-out units 66 and cassette feed mechanisms 111 and 112 for the upper and lower cassette transfer passage 15 and 16 will now be described with reference to Figures 20-25.

First of all, as shown in Figures 20-22, the cassette transfer member 17 is in the form of a housing having left and right side plates 113 and 114, a ceiling plate 115 and a bottom plate 116. The opposite ends of the upper and lower cassette transfer passage 15 and 16 are open.

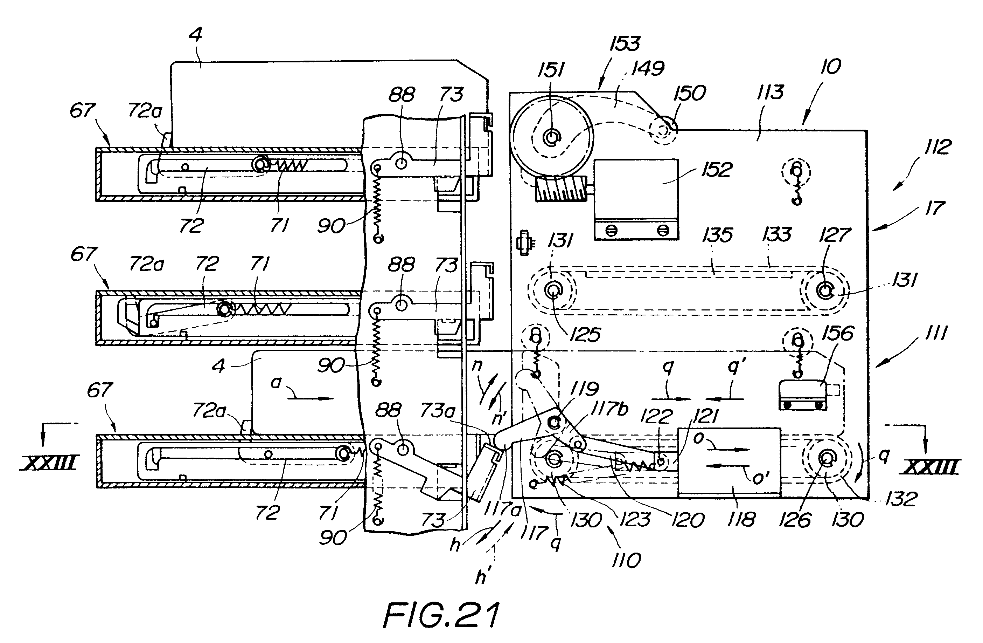

As also shown in Figures 20-22, the actuating mechanism 110 is attached to the outer surface of the side plate 113 at the lower portion thereof. In the drawings, only the actuating mechamism 110 at the side of transfer member 17 facing the second cassette storage shelf portion 7 is shown, but it is to be understood that a similar actuating mechanism 110 is provided at the side of the transfer member 17 facing the first cassette storage shelf 6 and is omitted only for the sake of clarity. The illustrated actuating mechanism 110 includes an actuating lever 117 for displacing the stopper 73 to an inoperative position and a driving solenoid 118. The actuating lever 117 is L-shaped and pivotally mounted on the side plate 113 by means of a pin 119 situated between arms 117a and 117b of the lever 117. The arm 117a is engageable from above with the stopper 73, and the other arm 117b is connected through a link 120 to an armature 121 of the solenoid 118 by means of a connecting pin 122 The actuating lever 117 is biased to turn in the direction of arrow n to the position shown in broken lines in Figure 21 by a spring 123 connected to the pin 122 for extending the armature 121 of the solenoid 118. On the other hand, when the solenoid 118 is energized to retract its armature 121, the actuating lever 117 is turned thereby in the direction of arrow n' to the position shown in full lines in Figure 21.

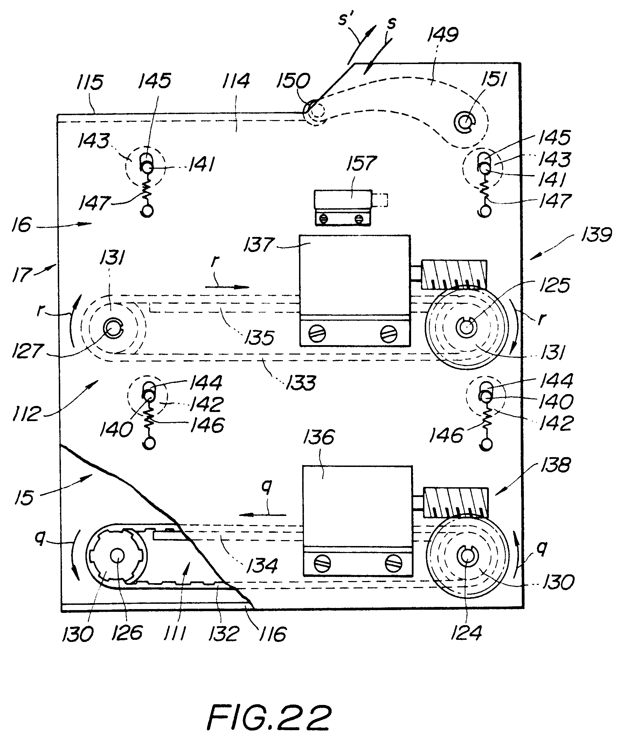

The cassette feed mechanisms 111 and 112 are identical, and are shown to include, below the front and rear portions of the cassette transfer passages 15 and 16, driving shafts 124 and 125 and driven shafts 126 and 127, respectively, which are horizontally journalled between the side plates 113 and 114 in parallel with each other (Figure 22). Feed rolls 128 and 129 are respectively secured on the left and right hand end portions of the shafts 124 and 126 and the shafts 125 and 127 (Figure 20). Pulleys 130 and 131 are secured to the left and right end portions of shafts 124 and 126 and of shafts 125 and 127, and timing belts 132 and 133 extend around and between pulleys 130, 131, respectively. The upper horizontal runs of the timing belts 132 and 133 are guided horizontally on left and right guides 134 and 135, respectively, secured horizontally to the inner surfaces of the side plates 113 and 114. The driving shafts 124 and 125 are rotatably driven through speed reducing units 138 and 139 by electric motors 136 and 137 mounted on the outer surface of the side plate 114 (Figure 22).

Idler shafts 140 and 141 are horizontally arranged between the side plates 113 and 114, in parallel with each other, above the front and rear portions of the cassette transfer passages 15 and 16, respectively. Idler rollers 142 and 143 are rotatably mounted on the opposite end portion of the shafts 140 and 141, respectively, which are movably supported in vertically elongate slots 144 and 145 in the side plates 113 and 114, and biased downwardly by paired springs 146 and 147.

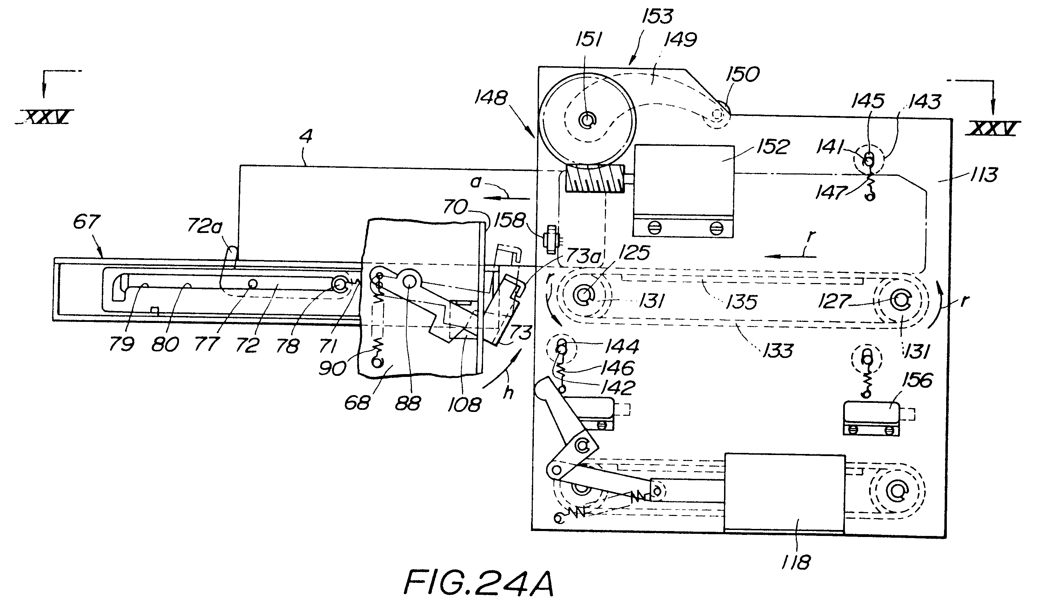

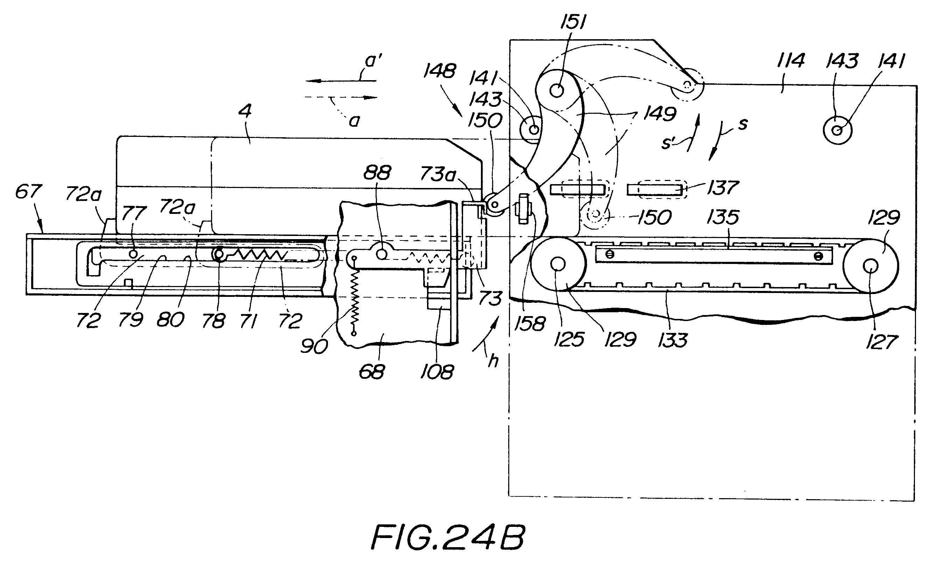

Left and right paired rotary arms 149 are secured, at one end, on end portions of a horizontal rotary shaft 151 which extends between, and has its opposite ends journalled in the side plates 113 and 114. The rotary shaft 151 is arranged above a delivery opening 148 at the end of the upper cassette transfer passage 116 facing towards the storage shelf portion 7. Rolls 150 are rotatably mounted on the free end portions of the arms 149 which are angularly displaced, together with the shaft 151, in one or the other of the directions indicated by arrows s and s' in Figure 24B by a reversible electric motor 152 mounted on the outer surface of the side plate 113 and connected with the shaft 151 through a speed reduction unit 153 (Figure 24A).

The automatic delivery of the tape cassettes 4 between the cassette storage compartments 5 in the cassette storage shelf portion 7 and the cassette transfer passages 15 and 16 of cassette transfer device 10 will now be explained.

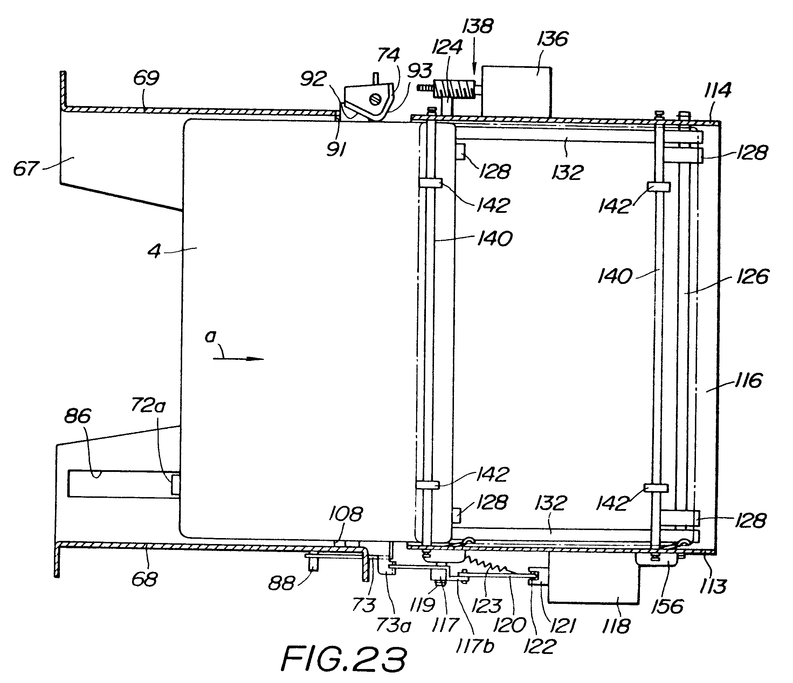

As shown in Figure 21, after the cassette transfer passage 15 of the cassette transfer device 10 has been aligned with the cassette insertion and removal opening 70 of a predetermined cassette storage compartment 5, the solenoid 118 is energized to retract its armature 121 in the direction of arrow o against the force of the spring 123 so that the actuating lever 117 is turned in the direction of the arrow n' from the position shown in broken lines to the position shown in solid lines. As a result of such movement of the actuating lever 117, its arm 117a acts downwardly on the projection 73a of the stopper 73 so that the stopper 73 is turned in the direction of arrow h' against the force of the spring 90, and is thereby moved to an inoperative position below the cassette insertion and removal opening 70 of the compartment 5. The stopper 73 is thus moved out of the path of the cassette 4 in the respective compartment 5 so that the cassette push-out unit 66, which was previously exerting a propulsive force against the tape cassette thereby holding the tape cassette against the stopper 73 as previously explained with reference to Figure 16, is free to propel the tape cassette 4 through the opening 70 of the compartment 5 in the direction of arrow a in Figures 21 and 23. The push-out unit 66 thereby delivers the cassette 4 into the cassette transfer passage 15 and continues to propel the cassette until the slide pin 78, on which the push-out member 72 is mounted, abuts against the end of the guide slot 80 near to the opening 70. At such time, the bottom surface of the tape cassette 4 is transferred onto the upper runs of the belts 132 and the feed rolls 130 on the driving shaft 124 which is already being rotatably driven by operation of the motor 136 in the direction for moving the upper runs of the belts 132 in the direction of the arrows q in Figures 21 and 22.

Therefore, the tape cassette 4 is automatically conveyed further into the cassette transfer passage 15 to a position shown in broken lines in Figures 21 and 23. During such movement of the cassette 4 in the transfer passage 15 by the feed rolls 130 and the timing belts 132, the idler rollers 142 are urged downwardly against the upper surface of the tape cassette by the springs 146 so as to avoid slippage between the cassette being transferred and the feed rolls 130 and the timing belts 132. It is to be noted that, as soon as the trailing end of the tape cassette 4 being extracted from the storage compartment 5 clears the opening 70, the detection member 74 is free to be returned by the force of the spring 103 in the direction of the arrow i' from the position of Figure 16 to the position shown on Figure 15. Simultaneously with such movement of the detection member 74 by the force of the spring 103, the stopper locking plate 105 is driven by the spring 109 in the direction of arrow k in Figure 15 so that the leading end portion of the stopper locking plate 105 projects above the stopper 73 which is then being held in its lowered or inoperative position by the actuating lever 117. Thus, the stopper 73 is thereafter held or locked in its lowered or inoperative position by the leading end portion of the stopper locking plate 105.

When the tape cassette 4 has been moved within the cassette transfer passage 15 to the position shown in broken lines in Figures 21 and 23, the forward part of the tape cassette is detected by a sensor 156 mounted on the side plate 113 and the sensor 156 is then operative to de-energize the solenoid 118 and to halt the operation of the electric motor 136. As a result, the actuating lever 117 is returned by the spring 123 to its raised or inoperative position shown in broken lines in Figure 21 and the operation of the feed rolls 130 and the timing belts 132 is halted. As earlier noted, even though the actuating lever 117 is raised to its inoperative position, the stopper 73 is retained in its lowered or inoperative position by the stopper locking plate 105.

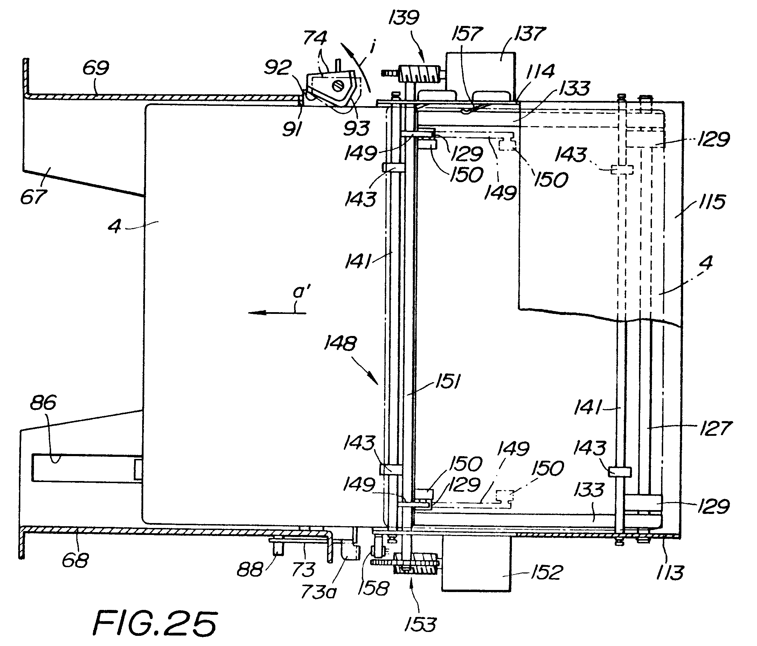

The operation of the cassette transfer device 10 automatically to return a tape cassette 4 from the cassette transfer passage 16 to a cassette storage compartment 5 from which is had been previously removed in the manner described above, will now be explained with reference to Figures 24A, 24B and 25. Initially, the cassette transfer member 17 is positioned so that its cassette transfer passage 16 is aligned with the opening 70 of the cassette storage compartment 5 into which the tape cassette is to be returned, as shown in Figure 24A. Then, the driving motor 137 is energized to rotate the driving shaft 125 in the direction for effecting movement of the timing belts 133 in the direction of arrow r. The combined action of the rotated feed rolls 131 on the shaft 125 and the belts 133 serves to drive the tape cassette 4 thereon through the passage 16 in the direction of the arrow r. Thus, the tape cassette 4 is pushed-out, rear end first, through the exit opening 148, as indicated in solid lines in Figure 24A and is propelled into the aligned compartment 5 through the opening 70 thereof. During such movement of the tape cassette by the feed rolls 131 and the belts 133, the idler rolls 143 are pressed downwardly on the upper surface of the tape cassette by the springs 147 so as to avoid slippage of the drive rolls 131 and the belts 133 relative to the bottom surface of the cassette 4.

As the rear end of the tape cassette 4 enters the compartment 5 through the opening 70, a rear end corner of the cassette acts against the inclined surface 93 of the detection member 74 so that the detection member 74 is turned in the direction of arrow i' in Figure 25 from the position shown in Figure 15 to the position shown in Figure 16 against the force of the spring 103. In response to such movement of the detection member 74, the stopper locking plate 105 is longitudinally displaced in the direction of arrow k' in Figure 16 against the force of the spring 109 and is thereby removed from engagement with the stopper 73 so as to release the stopper 73 for return by the spring 90 toward its operative position shown in full lines on Figure 24B. However, until the cassette 4 being inserted into the compartment 5 has attained its fully inserted position shown in full lines in Figure 24B, the released stopper 73 engages slidably against the bottom surface of the tape cassette 4 being inserted, as shown in broken lines in Figure 24A. Thus, insertion of the tape cassette 4 into the cassette storage compartment 5 can continue in the direction of arrow a' in Figure 24B without interference from the stopper 73.

As the tape cassette 4 is being thus fed from the passage 16 of the transfer device 10 into a compartment 5 in the direction of arrow a' in Figure 21A, the rear end of the cassette, that is to say the leading end as it moves in the direction of arrow a', abuts against the hook 72a of the push-out member 72 which had been previously shifted to its extended position shown in full lines in Figures 24A and 25. Immediately before such abutment of the tape cassette 4 against the hook 72a, a sensor 157 (Figure 22) attached to the side plate 114 detects the trailing end of the tape cassette 4 being moved in the direction of arrow r and, in response thereto, the motor 152 is energized in the forward direction, that is, in the direction for turning the shaft 151 and the arms 149 thereon in the direction of arrow s in Figure 24B. In response to such turning of the arms 149 in the direction of the arrow s, the rolls 150 at the free ends of the arms 149 are brought against the trailing end of the tape cassette 4 to continue the movement of the tape cassette 4 in the direction of arrow a' off the belts 133 and to the fully inserted position of the cassette 4, as shown in full lines on Figure 24B. During such further movement of the cassette 4 by the action of rolls 150 on the arms 149, the cassette thrusts against the hook 72a of the push-out member 72 so that the hook is displaced by the cassette in the direction of arrow a' against the force of the springs 71.

When the tape casssette 4 is completely inserted into the compartment 5, that is, attains the position shown in solid lines on Figure 24B, the forward end of the cassette, that is, the end adjacent the opening 70, moves off the stopper 73 and frees the stopper to be raised by the spring 90 to its operative position to block movement of the cassette out of the opening 70. A sensor 158 (Figures 24B and 24A) is attached to the cassette transfer member 17 and senses when the arms 149 have returned the tape cassette 4 to its fully inserted position in the compartment 5 so that the stopper 73 is free to return to its raised or operative position to block movement of the cassette out of the opening 70. When the sensor 158 thus detects that the tape cassette 4 has been completely returned or inserted into the cassette storage compartment 5, the operation of the motor 137 is halted and, at the same time, the direction of operation of the motor 152 is reversed so that the arms 149 are returned in the direction of arrow s' in Figure 24B to the inoperative position shown in broken lines in Figure 21. When the arms 149 attain such inoperative positions, the operation of the motor 152 is halted. Upon the return of the arms 149 to their inoperative positions, the push-out member 72 again tends to push the tape cassette 4 out of the respective compartment 5 through the opening 70. However, such ejection of the tape cassette 4 through the opening 70 of compartment 5 is prevented by the stopper 73 in its operative position.

Having described in detail the manner in which a tape cassette 4 is transferred between a compartment 5 of the cassette storage shelf portion 7 and the cassette transfer device 10, it will be appreciated that a tape cassette can be similarly transferred between a compartment 5 of the cassette shelf portion 6 and the cassette transfer device 10, so that a detailed description of these additional operations is omitted for the sake of simplicity.

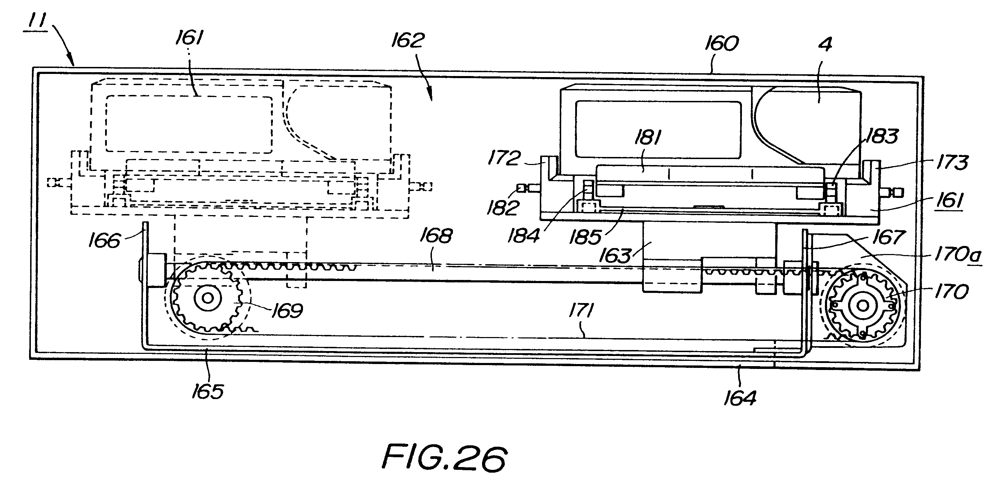

The cassette delivery units 11 and 13 respectively provided between the adjacent cassette storage shelf blocks $1_1$ and $1_2$ and $1_2$ and $1_3$, and between the VTR housing block 3 and the cassette storage shelf portion 6 of the adjacent cassette storage shelf block $1_1$, are of identical construction, so that only the cassette delivery unit 11 will be described in detail herein with reference to Figures 26-30. Each cassette delivery unit 11 includes a rectangular frame 160 dimensioned to be housed in the housing section 12 in place of the cassette storage compartments 5 at the adjoining portions of the cassette storage shelf portions 6 of the blocks $1_1$ and $1_2$, or of the blocks $1_2$ and $1_3$. A cassette feed table 161 is mounted movably within the frame 160 so as to be capable of delivering a tape cassette 4 between the cassette storage shelf portions 6 of the blocks $1_1$ and $1_2$ or of the blocks $1_2$

and $1_3$.

The frame member 160 is open at the side thereof facing the cassette transfer device 10 so as to define a cassette insertion and removal opening 162 through which a tape cassette 4 can be readily transferred between the cassette transfer member 17 of the unit 10 and the cassette feed table 161.

The cassette feed table 161 has a slide block 163 at the bottom thereof which is slidable along a horizontal guide shaft 168 supported, at its ends, by upright end pieces 166 and 167 of a U-shaped supporting frame 165 which is securely mounted, in turn, on a bottom plate 164 of the frame member 160. The cassette feed table 161 is movable between a first position shown in solid lines in Figure 26, and which may be adjacent the cassette storage shelf portion 6 of the block $1_1$ or $1_2$, in the case of the delivery unit 11 between the shelf blocks $1_1$ and $1_2$, and a second position shown in broken lines in Figure 26, and which is adjacent the cassette storage shelf portion 6 of the other block $1_2$ or $1_1$, respectively.

Generally, the cassette feed table 161 is moved between the above noted first and second positions to deliver a tape cassette 4 thereon from one to the other of the adjoining cassette storage shelf blocks $1_1$ and $1_2$, and the delivery unit 11 is further operative at each of the described first and second positions of its table 161 to effect transfer of a tape cassette between the table 161 and the cassette transfer device 10 associated with the block $1_1$ or $1_2$, respectively.

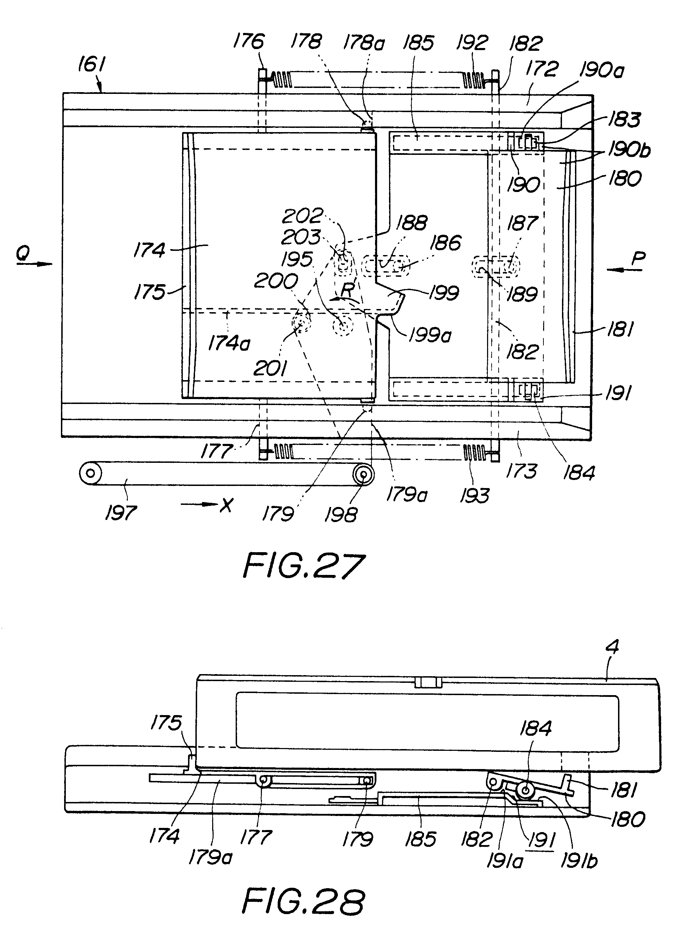

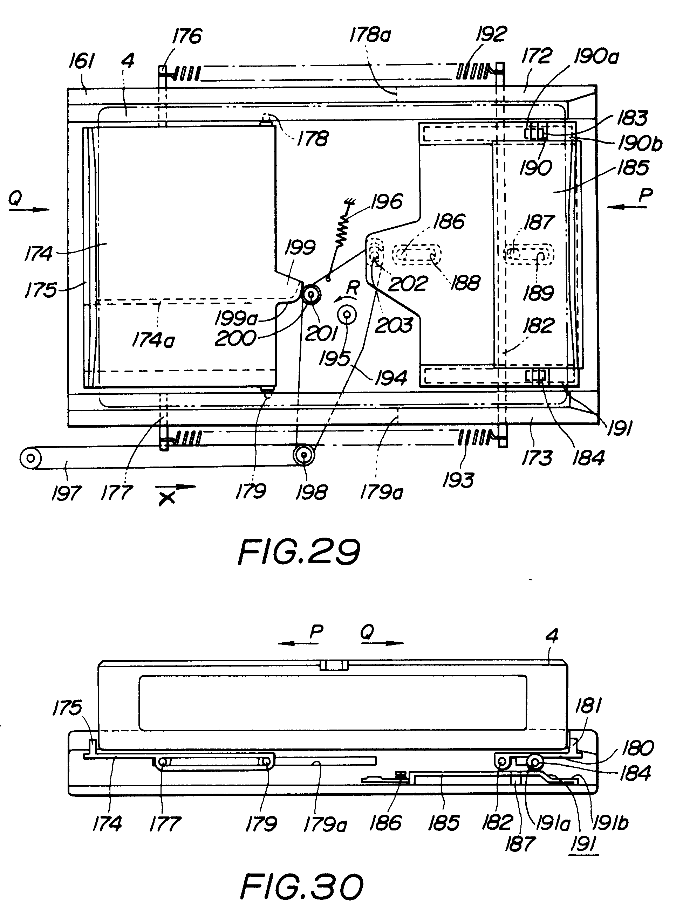

The structure of the cassette feed table 161 for performing the above functions is shown to include a pair of cassette guides 172 and 173 attached to opposite sides of the table 161 to receive and guide a tape cassette 4 therebetween. Between the guides 172 and 173 there is provided a first cassette receiving plate 174 onto which a tape cassette 4 is introduced in the direction of the arrow P (Figure 27) from the cassette transfer device 10. The first cassette receiving plate 174 has a rim or flange 175 acting as a stopper engageable by the leading end of a cassette inserted in the direction of the arrow P and acting to limit the insertion movement of the cassette relative to the plate 174. Slide guide shafts 176 and 177 which are axially aligned with each other project from opposite sides of the cassette receiving plate 174 and are slidably received in elongate guide slots 178a and 179a extending through and along base portions of the cassette guides 172 and 173, respectively. Further, guide pins 178 and 179 project in opposite directions from the plate 174 and are slidably received in the elongate guide slots 178a and 179a, respectively. Thus, the cassette receiving plate 174 is mounted for sliding movement relative to the table 161, for example, between the positions shown on Figures 27 and 29, respectively.

A second cassette receiving plate 180 is provided on the table 161 between the table 174 and the cassette insertion and removal opening 162, that is, at the portion of the table 161 facing towards the cassette transfer device 10. Along the side of the cassette receiving plate 180 facing away from the plate 174, there is provided an upstanding rim or flange 181 for engaging an end of a tape cassette 4 inserted on the table 161 in the direction of the arrow P on Figure 30 so as to inhibit its removal from the table 161 in the opposite direction, that is, in the direction of the arrow Q. The second cassette receiving plate 180 is mounted to rock on a supporting shaft 182 which extends along the edge of the plate 180 remote from the rim 181, and which has its end portions journalled in base portions of the cassette guides 172 and 173. Rocking of the cassette receiving plate 180 is controlled by cam-follower rolls 183 and 184 rotatably mounted at opposite ends of the plate 180 between the rim 181 and the supporting shaft 182, and being engageable, from above, with a slidable cam plate 185. The cam plate 185 is mounted for reciprocal limited movement relative to the table 161 in the direction of the arrows P and Q, for example, by means of pins 186 and 187 fixed relative to the table 161 and slidably received in slots 188 and 189 formed in the cam plate 185. The portion of the cam plate 185 underlying the second cassette receiving plate 180 is formed with inclined cam sections 190 and 191 engageable by cam follower rolls 183 and 184, respectively. Thus, by effecting movement of the cam plate 185, the second cassette receiving plate 180 is rocked between the positions shown in Figures 28 and 30, respectively.

Tension springs 192 and 193 are connected, at one end, to the guide shafts 176 and 177, respectively, and the other ends of the springs 192 and 193 are connected to end portions of the shaft 182. Thus, the springs 192 and 193 urge the first cassette receiving plate 174 toward the second cassette receiving plate 180, for example, to the relative positions shown in Figures 27 and 28.

The cassette feed table 161 is further provided with an operating lever 194 which is mounted for rotation on a shaft 195 supported by the feed table 161 and biased to turn in the clockwise direction, that is, the direction of arrow R in Figure 29, by means of a tension spring 196 connected between the lever 194 and the table 161. One end portion of the lever 194 extends beyond the table 161 at the side of the table having the guide 173 thereon and carries a pin 198 to which a horizontally extending link 197 is pivotally connected. The link 197 is shown to extend parallel to the cassette guide 173 and can be shifted longitudinally to turn the lever 194 about its supporting shaft 195. At one side of the lever 194 at a suitable radial distance from the supporting shaft 195, there is provided an actuating roll 200 rotatable on a shaft 201 and abuttable against a projection 199 extending from the inner side of the first cassette receiving plate 174. A bent flange 199a is formed along the edge of the projection 199 to provide a bearing surface for engagement by the roll 200 and leads into a guide flange 174a extending along the undersurface of the cassette receiving plate 174. The end of the operating lever 194 remote from the pin 198 carries a pin 203 engaging in a laterally elongate slot 202 formed in the cam plate 185.

It will be appreciated that turning of the operating lever 194 is effective simultaneously to displace the first cassette receiving plate 174 and the cam plate 185 between the positions shown on Figures 27 and 29, respectively.

More particularly, when a tape cassette 4 is to be inserted on the table 161, the operating lever 194 is in the position shown in Figure 27 so that the actuating roll 200 on the operating lever 194 is disengaged from the projection 199 of the first cassette receiving plate 174 which is thereby moved toward the second cassette receiving plate 180 by the force of the tension springs 192 and 193. With the operating lever 194 in the position shown in Figure 27, the pin 203 thereon causes displacement of the cam plate 185 in the direction of arrow P so that the cam follower rolls 183 and 184 are positioned on relatively lower horizontal surfaces 190b and 191b of cam sections 190 and 191, respectively. As a result, the second cassette receiving plate 180 is rocked or inclined downwardly from its support shaft 182 so that its rim 181 is at a relatively depressed position (Figure 28).

When a tape cassette 4 is introduced onto the table 161 from the side thereof at which the second cassette receiving plate 180 is situated, that is, in the direction of the arrow P, the leading end of the tape cassette abuts against the stopper rim 175 on the first cassette receiving plate 174. Thus, as the tape cassette 4 is further inserted, iniitially the cassette receiving plate 174 is moved thereby in the direction of the arrow P against the bias of the tension springs 192 and 193 with the roll 200 riding along the flange 174a until the plate 174 arrives at its tape cassette inserting position (Figures 29 and 30) in which the slide guide shafts 176 and 177 abut against respective ends of the elongate guide slots 178a and 179a. When the cassette receiving plate 174 attains its cassette inserting position (Figure 29), the actuating roll 200 moves off the flange 174a and the spring 196 turns the lever 194 in the direction of arrow R to engage the roll 200 with the flange 199a on the projection 199. Further, by such movement of the lever 194 by the spring 196 in the direction of arrow R, the pin 202 on the lever 194 causes movement of the cam plate 185 in the direction of arrow Q so that the cam-follower rollers 183 and 184 on the second cassette receiving plate 180 move along the inclined cam sections 190 and 191 and come to rest on the upper horizontal surfaces 190a and 191a, respectively. As a result of the foregoing, the second cassette receiving plate 180 is rocked upwardly about the supporting shaft 182 to the horizontal position shown in Figure 30, and at which the rim 181 on the plate 180 engages the adjacent end of the tape cassette 4 to retain the cassette between the stopper rim 175 and the rim 181.

After the lever 194 has been moved in the direction of arrow R by the spring 196 so as to engage the roll 200 with the projection 199 on the cassette receiving plate 174, the force of the springs 192 and 193 tending to move the plate 174 in the direction of arrow Q causes the projection 199 to act on the roll 200 along a line spaced from the pivoting axis of the lever 194 in the direction to turn the lever 194 in the direction of arrow R, that is, in the same direction as the spring 196. Thus, after the first cassette receiving plate 174 has attained its cassette inserting position, the lever 194 is automatically retained in the position shown in Figure 29 to hold the plate 174 in such position against the urging of the springs 192 and 193. As a result, the introduced tape cassette 4 is held on the first and second cassette receiving plates 174 and 180 between the rims 175 and 181, as shown in Figures 29 and 30.

As shown particularly in Figure 26, movements of the cassette feed table 161 between the positions shown in full lines and in broken lines, respectively, are effected by a feed mechanism including toothed pulleys or sprockets 169 and 170 rotatably mounted on the supporting frame 165 adjacent the upright end pieces 166 and 167 thereof, a timing belt 168 running around the sprockets 169 and 170 and having its upper run suitably fixed to the slide block 163, and a drive unit 170a including a conventional reversible electric motor and speed reduction gearing rotatably to drive the sprocket 170. Thus, by suitably operating the drive unit 170a, the slide block 163, and hence the table 161 thereon are driven along the guide shaft 168 to effect delivery of a tape cassette 4 on the table 161, for example, between the cassette storage shelf blocks $1_1$ and $1_2$.

After the cassette feed table 161 has been displaced along the guide shaft 168, the tape cassette 4 thereon is discharged from the feed table 161 into the cassette transfer device 10 associated with the cassette storage shelf block $1_1$, $1_2$ or $1_3$ to which the table 161 has been fed. More particularly, in order to discharge the tape cassette 4 from the feed table 161, the horizontally extending link 197 is suitably displaced longitudinally in the direction of arrow x in Figure 29 to effect counterclockwise turning of the operating lever 194 with the result that the roll 200 is disengaged from the projection 199 on the cassette receiving plate 174. As a result of the foregoing, the springs 192 and 193 can act on the cassette receiving plate 174 to move it in the direction of arrow Q from the position shown in Figure 29 toward the position shown in Figure 27. The counterclockwise turning of the operating lever 194 in the direction of arrow R' in Figure 27 also effects movement of the cam plate 185 in the direction of arrow P so that the cam-follower rolls 183 and 184 are engaged by the inclined cam surfaces 190 and 191 and then by the lower horizontal surfaces 190b and 191b, respectively. Thus, the cassette receiving plate 180 is rocked downwardly about its supporting shaft 182, as shown in Figure 28, to disengage the 181 from the tape cassette 4. Thus, the springs 192 and 193 can now displace the cassette receiving plate 174 in the direction of arrow Q from the position shown in Figures 29 and 30 to the position shown in Figures 27 and 28 with the result that the stopper rim 175 on the plate 174 propels the tape cassette 4 at least partly off the feed table 161, and at least partly into the cassette transfer passage 15 of the transfer device 10. Thereafter, the transfer device takes over the completion of the insertion of the cassette 4 into the passage 15 in the same manner as described above with respect to the discharge of a cassette from a compartment 5 into the transfer device 10. As the cassette receiving plate 174 is moved by the springs 192 and 193 from the position of Figure 29 to the position of Figure 27, the roll 200 engages the side of the flange 174a to hold the lever 194 against turning by the spring 196.

It will be appreciated that, after the delivery unit 11 has received a tape cassette 4 from the transfer device 10 associated with one of the storage shelf blocks $1_1$, $1_2$ and $1_3$, for example, the block $1_1$, and then discharged such cassette into the transfer device 10 associated with the next adjacent cassette storage shelf block, for example, the block $1_2$, such transfer device 10 which receives the cassette can be shifted and operated, as previously described for depositing the cassette into a desired cassette storage compartment 5 of the block $1_2$.

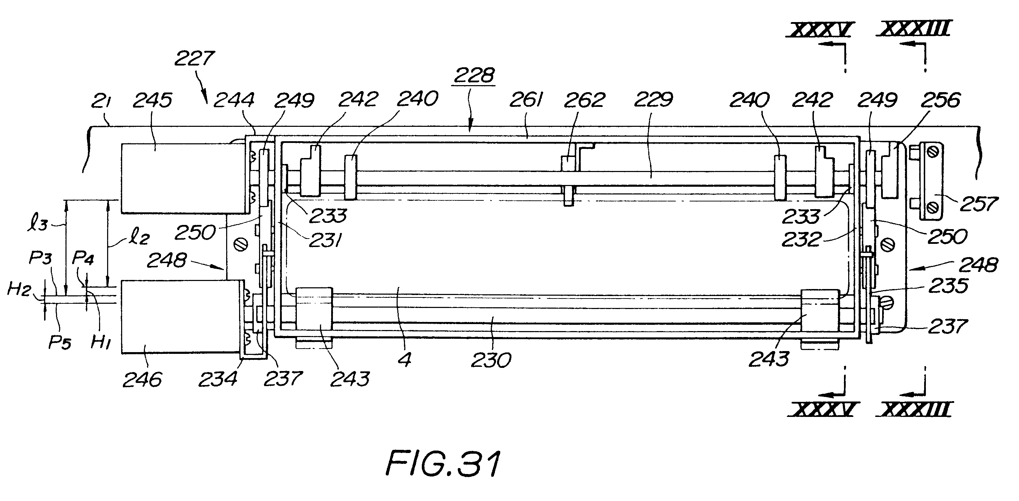

Each of the VTRs $2_1$, $2_2$, $2_3$ and $2_4$ contained in the VTR housing block 3 has an automatic cassette input and output device 227 which is in facing relation to a cassette inlet and outlet opening 226 (Figure 35) of the respective VTR. The automatic cassette input and output device 227 associated with the VTR $2_1$ will be described herein with reference to Figures 31-35, and it will be understood that the other VTRs have identical automatic input and output devices associated therewith.

In general, the purpose of the device 227 is to effect input into the opening 226 of the VTR $2_1$ of the tape cassette 4 which is discharged from the cassette delivery unit 13, or to effect the output from the opening 226 of a cassette 4 ejected from the VTR $2_1$, and the introduction of such an ejected cassette into the cassette delivery unit 13.

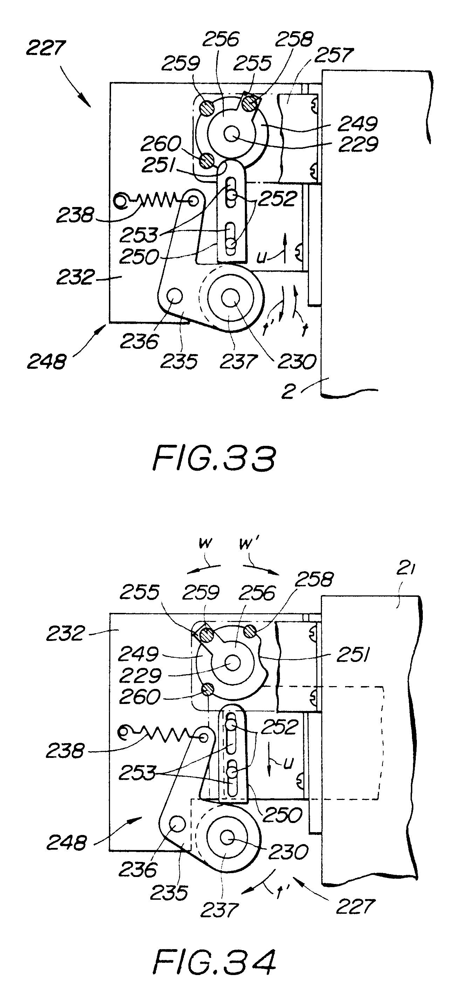

The automatic cassette input and output device 227 has a substantially rectangular frame 228 attached to the front surface of the housing of the VTR $2_1$ about the opening 226, as shown in Figures 31 and 35. Within the frame 228 there are disposed an upper shaft 229 and a lower shaft 230 extending horizontally and parallel to each other above and below, respectively, the path of cassettes into and out of the opening 226. The upper shaft 229 has its opposite end portions extending through and being rotatably supported by bearings 233 secured to upper parts of opposed side members 231 and 232 of the frame 228. Thus, the upper shaft 229 is mounted for rotation about a fixed axis. The lower shaft 230 is mounted for rotation about an axis which is capable of limited displacements in the vertical direction. More particularly, bell-cranks 234 and 235 are situated outside the side members 231 and 232, respectively, and are pivotally mounted on pins 236 supported by lower parts of the adjacent side members 231 and 232 of the frame 228. The bell-cranks 234 and 235 have approximately horizontally extending arms carrying bearings 237 in which the adjacent ends of the lower shaft 230 are rotatably mounted. The other, or approximately vertically extending arms of the bell-cranks 234 and 235 are connected to springs 238, by which the bell-cranks 234 and 235 are urged to pivot about their respective pins 236 in the direction of arrow t in Figures 33 and 35.

Idler rollers 240 are mounted on opposite end portions of the upper shaft 229 within the frame 228 so as to be freely rotatable with respect to the shaft 229. Also mounted on the opposite end portions of the shaft 229 between the side frame members 231 and 232, are arms 242 which, however, are secured to the shaft 229 for turning with the shaft 229. The free ends of the rotary arms 242 have rollers 241 rotatably mounted thereon.

Feed rolls 243 are secured on the opposite end portions of the lower shaft 230 within the frame 228. A reversible electric motor 245 is mounted on the side frame member 231 by way of a bracket 244 and is suitably coupled with the adjacent end of the shaft 229 for driving the shaft 229. Another reversible electric motor 246 is mounted on the substantially horizontal portion of the bell-crank 234 which, as shown on Figure 31, is desirably of U-shaped cross-section. The motor 246 is suitably coupled with the adjacent end of the shaft 230 for rotating the shaft 230.

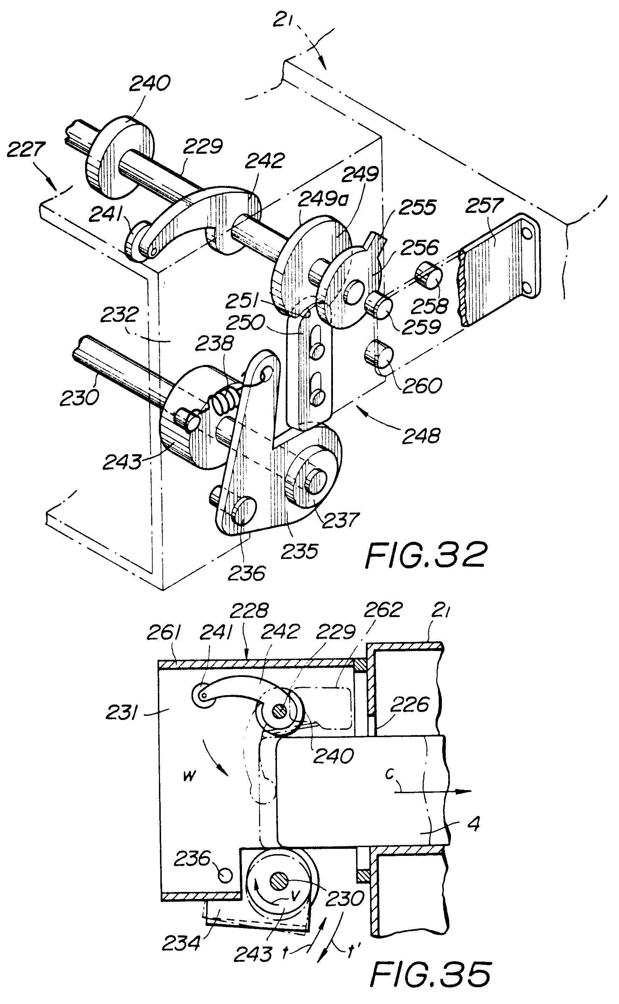

Automatic roll-lifting devices 248 are provided at the side frame members 231 and 232 for controlling the vertical position of the shaft 230, and hence of the feed rolls 243 thereon. Each of the roll-lifting devices 248 includes a rotary cam 249 secured to the adjacent end of the upper shaft 229, and a cam-following slide plate 250 which is mounted for vertical movement on the adjacent side frame member 231 or 232 between the respective cam member 249 and the bell-crank 234 and 235. Each of the cams 249 is shown in Figures 32-34 to be in the form of a substantially circular disc having a recess or cut-out 251 in its otherwise circular periphery 239a. Each slide plate 250 has elongate slots 253 therein slidably receiving mounting pins 252 extending from the adjacent side frame member 231 or 232 to permit vertical movement of the slide plates 250. Each of the slide plates 250 has a rounded upper end bearing against the peripheral surface of the respective cam 249, while the lower end of each of the slide plates 250 is engaged from below by the substantially horizontal arm portion of the respective bell-crank 234 or 235. It will be appreciated that the springs 238, in urging the bell-cranks 234 and 235 to pivot in the direction of arrow t in Figure 33 also urge the slide plates 250 vertically upwardly in the direction of arrow u for engagement, at their upper ends, with the peripheries 249a of the cams 249.

To the end of the shaft 229 extending outwardly from the side frame member 232 there is secured a rotary disc 256 having a peripheral projection 255 (Figures 32-34). A sensor attachment plate 257 (Figures 31 and 32) extends from the front of the housing of the VTR $2_1$ parallel to the side frame member 232 in the vicinity of the rotary disc 256 and carries three spaced apart sensors 258, 259 and 260 for sensing three respective rotational positions of the projection 255. The projection 255 on the disc 256 is rotated in phase with the rotary arms 242 so that the rotational position of the rotary arms 242 can be detected by the sensors 258-260 with reference to the rotational position of the projection 255. Another sensor 262 (Figures 31 and 35) depends from the central portion of the top frame member 261 of the frame 228 and can detect positions of a tape cassette passing through the opening 226 of the VTR $2_1$, as hereinafter described in detail.

The operation of the device 227 in automatically inserting into the opening 226 of the VTR $2_1$ a tape cassette 4 delivered thereto by the respective cassette delivery unit 13 is as follows.

When the cassette feed table 161 of the unit 13 is positioned in front of the opening 226, the link 197 of the unit 13 is suitably displaced in the direction of arrow x in Figure 27 so as to cause the previously described discharge of the tape cassette from the table 161 in the direction toward the opening 226, that is, into the frame 228. As the leading end of the discharged tape cassette nears the feed rolls 243, the motor 246 is suitably energized to drive the shaft 230 on which the rolls 243 are secured. At such time, the rotary cams 249 on the shaft 229 are rotationally positioned so that the peripheral recesses 251 thereof receive the upper ends of the slide plates 250, as shown in Figures 32 and 33. As a result, the feed rolls 243 are urged by the springs 238 to their raised position $P_4$ at which the surfaces of the feed rolls 243, at the top thereof, extend a distance $H_1$ above the bottom surface of the tape cassette 4 as driven into the device 227 from the delivery unit 13. As a result of the foregoing, the vertical distance $1_2$ measured between the bottom surfaces of the idler rolls 240 on the shaft 229 and the top surfaces of the feed rolls 243 when in the position $P_4$, is less than the vertical dimension $1_3$ of the tape cassette 4 (Figure 31).

When the leading end of the tape cassette is propelled by the feed table 161 of the cassette delivery unit 13 between the idler rolls 240 and the feed rolls 243, the feed rolls 243 are displaced downwardly by the tape cassette 4 in the direction of arrow t' in Figure 33 against the force of the springs 238. Therefore, the feed rolls 243, while being driven by the motor 246, are pressed against the bottom surface of the tape cassette 4 by the force of the springs 238 wth the result that the driving force of the feed rolls 243 is positively transmitted to the tape cassette to introduce the cassette through the opening 226 into the conventional cassette holder (not shown) within the VTR $2_1$.

When the tape cassette 4 has been introduced into VTR $2_1$ to the position shown in full lines in Figure 35, the sensor 262 detects the trailing end of the tape cassette and, in response thereto, operation of the motor 246 is halted and operation of the motor 245 is commenced so as to turn the shaft 229 and the arms 242, the rotary cams 249 and the rotary disc 256 in the direction of arrow w in Figures 34 and 35. As the cams 249 are turned from the position shown in Figure 33, the peripheral recesses 251 therein move away from the upper ends of the slide plates 250 with the result that the slide plates 250 are displaced downwardly in the direction of arrow u' in Figure 234 so as to turn the bell-cranks 234 and 235 in the direction of arrow t' and thereby move the feed rollers 243 downwardly to the position $P_5$ (Figure 31) in which the top surfaces of the feed rolls 243 are spaced

by a distance $H_2$ from the bottom surface of the tape cassette 4. At the same time, the rotary arms 242 are turned in the direction of arrow w from their inoperative positions shown in full lines in Figure 35 so that the rolls 241 at the free ends of the arms 242 will engage the trailing end of the tape cassette, as shown in broken lines, and thereby continue the automatic feeding of the tape cassette in the direction of arrow c into the VTR $2_1$. Such movement of the tape cassette by the arms 242 continues until the projection 255 on the rotary disc 256 is detected by the sensor 260, whereupon the operation of the motor 245 is halted. At such time, the insertion of the tape cassette 4 into the cassette holder of VTR $2_1$ has progressed to the extent necessary for conventionally initiating automatic loading of the cassette in the VTR and reproducing or recording operations.

Upon completion of the video reproducing or recording operation, the tape cassette 4 within the VTR $2_1$ is conventionally ejected automatically out of the opening 226. At such time, the rotary arms 242 are in the position shown in broken lines in Figure 35 so that the ejected tape cassette 4 comes to rest at a predetermined position in which it abuts against the rolls 241 on the arms 242. Since the upper surfaces of the feed rolls 243 are, at this time, in the lowered position $P_5$, that is, the distance $H_2$ below the position $P_3$ of the bottom surface of the tape cassette 4 being ejected, the feed rolls 243 do not interfere with the ejection of the tape cassette 4.

When the leading end (considering the direction in which the tape cassette is ejected) of the ejected tape cassette 4 is detected by the sensor 262, the motor 245 is operated in the direction to cause turning of the shaft 229, and hence of the arms 242, the cams 249 and the disc 256 thereon, in the direction of arrow w' in Figure 34. When the arms 242 are returned to the inoperative position shown in full lines in Figures 32 and 35, the projection 255 on the disc 256 is returned to its original position (Figure 33) where it is detected by the sensor 258 and, in response thereto, the operation of the motor 245 is halted.

Further, upon the return of the arms 242 to their inoperative position, the recesses 251 of the cams 249 are disposed to receive the upper portions of the slide plates 250 so that the bell-cranks 234 and 235 can be turned in the direction of arrow t by the springs 238, with the result that the feed rolls 243 are pressed in the direction of arrow u on Figure 33 against the bottom surface of the tape cassette.

When the cassette feed table 161 of the delivery unit 13 is positioned in front of the opening 226, the driving motor 246 is operated in the direction for driving the shaft 230 and the feed rolls 243 thereon in the counterclockwise direction, that is, the direction opposed to arrow v in Figure 35. As a result of the foregoing, the ejected tape cassette 4 is fed out of the opening 226 of the VTR $2_1$ and is automatically introduced onto the cassette feed table 161 in the manner previously described.

In operation of the above described automatic tape cassette selecting and loading device, selected tape cassettes 4 to be reproduced by the VTRs $2_1$, $2_2$, $2_3$,---, are removed from the respective storage compartments 5 in the shelf portions 6 and/or 7 of the storage shelf blocks $1_1$, $1_2$, $1_3$,---, and carried by the cassette transfer devices 10 travelling between the shelf portions 6 and 7 of the respective shelf blocks $1_1$, $1_2$, $1_3$,---. Each cassette transfer device 10 carries the tape cassette 4 deposited therein over the extent of the respective storage block $1_1$, $1_2$, $_3$,---, in the direction toward the VTR housing block 3 and introduces the carried tape cassette 4 onto the cassette feed table 161 of the cassette delivery unit 11 or 13 associated with the respective storage block. Such delivery unit 11 or 13 effects delivery of the tape cassette between adjacent ones of the cassette storage shelf blocks $1_1$ and $1_2$ or $1_2$ and $1_3$, or between the cassette storage shelf block $1_1$ and the VTR housing block 3, respectively. Each cassette thus introduced by the cassette transfer device 10 onto the cassette feed table 161 of one of the cassette delivery units 11 is shifted from one cassette storage shelf block to the next cassette storage shelf block in the direction toward the VTR housing block 3, for example, from the block $1_2$ to the block $1_1$, whereupon the tape cassette is discharged from the cassette feed table 161 into the cassette transfer member 17 of the cassette transfer device 10 associated with cassette storage block $1_1$. A tape cassette thus delivered by one of the delivery units 11 from the transfer device 10 associated with storage block $1_2$ to the transfer device 10 associated with storage block $1_1$, is then carried by the last mentioned transfer device 10 and introduced therefrom onto the cassette feed table 161 of the cassette delivery unit 13 associated with the VTR $2_1$, $2_2$, $2_3$ or $2_4$ in which the selected tape cassette 4 is to be reproduced. Finally, that selected tape cassette 4 is discharged from the feed table 161 of the cassette delivery unit 13 and loaded into the corresponding VTR through the respective opening 226 by the respective automatic cassette input and output device 227.

It will be appreciated that a selected tape cassette 4 stored in a compartment 5 of the cassette storage shelf block $1_3$ would be removed from such compartment into the cassette transfer member 17 of the transfer device 10 associated with block $1_3$ and transferred, by such device 10, to the table 161 of the cassette delivery unit 11 bridging

the blocks $1_3$ and $1_2$. The table 161 of that delivery unit 11 would, after shifting, deliver the tape cassette thereon to the cassette transfer device 10 associated with the block $1_2$, and such transfer device 10 would carry the tape cassette for introduction to the table 161 of the delivery unit 11 bridging the cassette storage shelf blocks $1_2$ and $1_1$. From the last mentioned delivery unit 11, the tape cassette would be delivered to the cassette transfer device 10 associated wtih cassette storage shelf block $1_1$ for transfer, by such device 10 to the delivery unit 13 bridging the cassette storage shelf block $1_1$ and the VTR housing block 3 and from which the tape cassette is input to the selected VTR by way of the respective device 227, as earlier described.

It will be apparent from the above that, in the automatic tape cassette selecting and loading device a number of selected tape cassettes 4 may be transferred simultaneously in the direction toward the VTR housing block 3 by parallel operations of the cassette transfer devices 10 associated with the tape storage shelf blocks $1_1$, $1_2$, and $1_3$, respectively.

Similarly to the above, after the playback of a tape cassette 4 in one of the VTRs $2_1$, $2_2$, $2_3$, $2_4$ has been completed, such tape cassette is introduced by the respective cassette input and output device 227 into the associated cassette delivery unit 13. The cassette is then delivered by unit 13 to the cassette transfer device 10 associated with the adjacent cassette storage shelf block $1_1$ so as to be introduced by that transfer device 10 either into a compartment 5 of the storage shelf block $1_1$ or into the delivery unit 11 bridging the blocks $1_1$ and $1_2$. If the cassette is introduced into such delivery unit 11, that delivery unit 11 delivers the cassette to the transfer device 10 associated with the cassette storage shelf block $1_2$, which is then operative to transfer the cassette either to a storage compartment 5 of the cassette storage shelf block $1_2$ or to the delivery unit 11 bridging the blocks $1_2$ and $1_3$. Finally, if the cassette is introduced into the cassette delivery unit 11 bridging the blocks $1_2$ and $1_3$, the cassette is thereby fed to the cassette transfer device 10 associated with the block $1_3$ and which is operative to transfer the cassette to a selected compartment 5 of the block $1_3$. Thus, the tape cassettes reproduced in the VTRs are returned sequentially so as to be stored again in the respective storage compartments 5. During such return of the cassettes to the original storage compartments, the cassette transfer device 10 associated with the cassette storage shelf blocks $1_1$, $1_2$, and $1_3$, respectively, can again operate simultaneously in parallel so that a cassette storage facility of very large capacity can be provided without unduly extending the time required between successive reproductions of the tape cassettes by the VTRs.

## Claims

1. An automatic tape cassette loading device having a plurality of cassette storage shelf blocks ($1_1$, $1_2$, $1_3$) arranged in adjoining side-by-side relation and each including a plurality of cassette storage compartments (5) to contain respective tape cassettes (4);
   cassette transfer devices (10) each associated with one of the cassette storage shelf blocks ($1_1$, $1_2$, $1_3$) selectively to insert and remove a tape cassette (4) in and from the cassette storage compartments (5) of the respective cassette storage shelf block and to transfer each removed tape cassette (4) within a range corresponding to the extent of the respective cassette storage shelf block;
   a VTR housing block (3) mounted adjacent an end of the side-by-side arrangement of the cassette storage shelf blocks ($1_1$, $1_2$, $1_3$) and containing at least one VTR (($2_1$) at least to reproduce signals recorded in a tape cassette (4) delivered thereto from one of the cassette storage shelf blocks ($1_1$, $1_2$, $1_3$); and
   a cassette delivery unit (11) provided between each two adjoining side-by-side cassette storage shelf blocks ($1_1$, $1_2$, $1_3$) and operative to deliver a tape cassette (4) from one to another of the cassette transfer devices (10) associated with said adjoining cassette storage shelf blocks ($1_1$, $1_2$, $1_3$);
   characterised in that the cassette delivery unit (11) includes feed table means (161) shiftable laterally between first and second positions situated within the associated cassette storage shelf blocks ($1_1$, $1_2$, $1_3$), respectively, in each of which positions the feed table means (161) are operative to receive and to discharge a tape cassette (4) and with the first position substantially occupying the position of one of the cassette storage compartments (5) in a first one of said adjoining cassette storage shelf blocks ($1_1$, $1_2$, $1_3$) and the second position substantially occupying the position of one of the cassette storage compartments (5) in a second one of said adjoining cassette storage shelf blocks ($1_1$, $1_2$, $1_3$) adjacent to said first one; and
   an additional cassette delivery unit (13) is provided between the VTR ($2_1$) and the cassette storage shelf block ($1_1$) adjacent thereto and is operative to deliver a tape cassette between said adjacent cassette storage shelf block ($1_1$) and the VTR ($2_1$).

2. An automatic tape cassette loading device according to claim 1; in which each of the cassette storage shelf blocks ($1_1$, $1_2$, $1_3$) includes two storage shelf portions (6, 7) each containing the storage compartments (5) and spaced apart to define an aisle between the storage shelf portions (6, 7) through which the respective cassette transfer device (10) is movable.

3. An automatic tape cassette loading device according to claim 2; in which one (6) of the shelf portions (6, 7) of each of the cassette storage shelf blocks ($1_1$, $1_2$, $1_3$) has openings (8, 9) facing away from the aisle and communicating with at least some of the compartments (5) in one shelf portion (6) to permit the manual insertion and removal of tape cassettes through the openings (8, 9) and each of the cassette transfer devices (10) is operative to transfer cassettes between the compartments (5) communicating with the openings (8, 9) and other compartments (5) in said one shelf portion (6) and in the other (7) of the two shelf portions (6, 7) of the respective cassette storage shelf block.

4. An automatic tape cassette loading device according to any one of claims 1 to 3; in which the video tape recorder housing block (3) contains a plurality of video tape recorders ($2_1$, $2_2$, $2_3$) disposed one above the other, and there is one of the additional cassette delivery units (13) for each of the video tape recorders ($2_1$, $2_2$, $2_3$), with each of the additional cassette delivery units (13) being operative to deliver a tape cassette (4) between the adjacent cassette storage block ($1_1$) and the respective VTR.

5. An automatic tape cassette loading device according to any one of claims 1 to 4; in which the feed table means (161) includes a first plate (174) and a second plate (180) arranged side-by-side and having respective edges remote from each other with rims (175, 181) therealong and extending parallel with the direction of the lateral shifting of the table means (161), the first plate (174) being slidable toward and away from the second plate (180) at right angles to the rims (175, 181), spring means (192, 193) to urge the first plate toward the second plate, latch means (194, 200) to hold the first plate against movement by the spring (192, 193) means at a cassette receiving position in which a tape cassette (4) can be accommodated between the rims (175, 181), means (184, 185) to mount the second plate (180) to rock between a raised position in which the rim (181) on the second plate is engageable with a cassette (4) on the first and second plates (174, 180) and a depressed position in which the rim (181) on the second plate (180) is released from a cassette (4), and means (197) to move the second plate (180) to the depressed position simultaneously with release of the latch means (200) so that the spring means (192, 193) discharges a cassette from the feed table (161) by moving the first plate (174) toward the second plate (180) while the second plate is rocked to the depressed position.

6. An automatic tape cassette loading device according to claim 5; in which the latch means (200) includes a pivoted operating lever (194) having an abutment (200) thereon engageable in front of a projection (199) on the first plate (174) in the cassette receiving position, and the means to move the second plate (180) includes a cam member (135) connected with the operating lever (194) and engageable from above by the second plate (180) for holding the second plate (180) in the raised position when the abutment (200) engages the projection (199) and to permit rocking of the second plate (180) to the depressed position when the operating lever (194) is pivoted to disengage the abutment (200) from projection (199).

7. An automatic tape cassette loading device according to claim 6; in which each of the cassette transfer devices (10) includes a transfer member (17) defining a cassette receiving passage (15, 16) open at its ends, and means to propel a cassette (4) out of the passage (15, 16) and onto the first plate (174) of the feed table means (161) while the second plate (180) is in the depressed position so that the propelled cassette (4) acts against the rim (175) on the first plate (174) to urge the first plate (174) to the cassette receiving position; and in which the feed table means (161) further includes means (197) to urge the operating lever (194) to move in the direction engaging the abutment (200) in front of the projection (199) when the first plate (174) is moved to the cassette receiving position by the propelled cassette (4).

8. An automatic tape cassette loading device according to claim 7; in which the VTR ($2_1$, $2_2$, $2_3$) housing block (3) further includes cassette input and output means (227) interposed between each of the VTRs and the respective additional cassette delivery unit (13) and being operative selectively to propel a cassette (4) therethrough in the direction from the respective additional cassette delivery unit (13) to the respective VTR for loading in the VTR ($2_1$, $2_2$, $2_3$) and to propel a cassette (4) ejected from the respective VTR through the cassette input and output means (227) in the direction toward the respective additional cassette delivery unit (13) for reception by the feed table means (161) of the additional cassette delivery unit (13).

9. An automatic tape cassette loading device according to claim 9; in which the cassette input and output means (227) includes drive roll means (243) disposed below a path of the tape cassette (4) between the respective delivery unit (13) and VTR ($2_1$, $2_2$, $2_3$), means (235) mounting the drive roll means (243) for vertical movements toward and away from the path, spring means (238) to urge the drive roll (24) means upwardly against the bottom surface of a cassette (4) in the path, first reversible motor means (246) to rotate the drive roll means (243), a rotatable shaft (239) extending across the path above the drive roll means (243), radial arms (242) fixed to the shaft (229) to turn with the shaft (229) between a raised inoperative position above the path and a lowered position interposed in the path, cam means (249) fixed to the shaft 229) to control the vertical position of the drive roll means (243) in accordance with rotation of the shaft (229), and second reversible motor means (245) to turn the shaft (229).

10. An automatic tape cassette loading device according to claim 10; in which the cassette input and output means (227) further includes a position indicating element (255) rotating with the shaft (229), and sensor means (258, 259, 260) detecting the position indicating element (255) in several rotational positions of the arms (242) and to control the first and second motor means (245, 246).

**Revendications**

1. Dispositif de chargement de cassette à bande automatique ayant plusieurs blocs d'étagère de rangement de cassette ($1_1$, $1_2$, $1_3$) disposés en relation côte-à-côte adjacente et comprenant chacun plusieurs compartiments de rangement de cassette (5) destinés à contenir des cassettes à bande respectives (4); des dispositifs de transfert de cassette (10) associés chacun à un des blocs d'étagère de rangement de cassette ($1_1$, $1_2$, $1_3$) afin d'insérer et d'enlever sélectivement une cassette à bande (4) dans et hors des compartiments de rangement de cassette (5) du bloc d'étagère de rangement de cassette respectif et afin de transférer chaque cassette à bande enlevée (4) sur une plage correspondant à l'étendue du bloc d'étagère de rangement de cassette respectif; un bloc de logement de magnétoscope (3) monté de façon adjacente à une extrémité de l'agencement côte-à-côte des blocs d'étagère de rangement de cassette ($1_1$, $1_2$, $1_3$) et contenant au moins un magnétoscope ($2_1$) afin au moins de reproduire des signaux enregistrés sur une cassette à bande (4) avancée là depuis un des blocs d'étagère de rangement de cassette ($1_1$, $1_2$, $1_3$); et une unité d'avance de cassette (11) prévue entre deux blocs d'étagère de rangement de cassette adjacents côte-à-côte ($1_1$, $1_2$, $1_3$) et fonctionnant de façon à délivrer une cassette à bande (4) de l'un à l'autre des dispositifs de transfert de cassette (10) associés aux dits blocs d'étagère de rangement de cassette adjacents ($1_1$, $1_2$, $1_3$); caractérisé en ce que l'unité d'avance de cassette (11) comprend des moyens de table d'avance (161) pouvant être déplacés latéralement entre des première et deuxième positions situées de manière respective à l'intérieur des blocs d'étagère de rangement de cassette associés ($1_1$, $1_2$, $1_3$), les moyens de table d'avance (161) pouvant dans chacune de ces positions fonctionner de façon à recevoir et décharger une cassette à bande (4) et avec la première position occupant sensiblement la position de l'un des compartiments de rangement de cassette (5) dans un premier des dits blocs d'étagère de rangement de cassette adjacents ($1_1$, $1_2$, $1_3$) et la deuxième position occupant sensiblement la position de l'un des compartiments de rangement de cassette (5) dans un deuxième des dits blocs d'étagère de rangement de cassette ($1_1$, $1_2$, $1_3$) adjacent au dit premier; et une unité d'avance de cassette additionnelle (13) est prévue entre le magnétoscope et le bloc d'étagère de rangement de cassette ($1_1$) adjacent et peut fonctionner de façon à délivrer une cassette à bande entre le dit bloc d'étagère de rangement de cassette adjacent ($1_1$) et le magnétoscope ($2_1$).

2. Dispositif de chargement de cassette à bande automatique selon la revendication 1, dans lequel chacun des blocs d'étagère de rangement de cassette ($1_1$, $1_2$, $1_3$) comprend deux parties d'étagère de rangement de cassette (6, 7) contenant chacune les compartiments de rangement (5) et espacées de façon à définir un couloir entre les parties d'étagère de rangement (6, 7) à travers lequel le dispositif de transfert de cassette (10) respectif est mobile.

3. Dispositif de chargement de cassette à bande automatique selon la revendication 2, dans lequel une (6) des parties d'étagère (6, 7) de chacun des blocs d'étagère de rangement de cassette ($1_1$, $1_2$, $1_3$) possède des ouvertures (8, 9) dirigées à l'écart du couloir et communiquant avec au moins certains des compartiments (5) dans une partie d'étagère (6) afin de permettre l'insertion et le retrait manuels des cassettes à bande à travers les ouvertures (8, 9) et chacun des dispositif de transfert de cassette (10) peut fonctionner de façon à transférer des cassettes entre les compartiments (5) qui communiquent avec les ouvertures (8, 9) et d'autres compartiments (5) dans la dite partie d'étagère (6) et dans l'autre (7) des deux parties d'étagère (6, 7) du bloc d'étagère de rangement de cassette respectif.

4. Dispositif de chargement de cassette à bande automatique selon l'une quelconque des revendications 1 à 3, dans lequel le bloc de logement de magnétoscope (3) contient plu-sieurs magnétoscopes ($2_1$, $2_2$, $2_3$) disposés l'un au-dessus de l'autre, et il y a une des unités d'avance de cassette additionnelles (13) pour chacun des magnétoscopes ($2_1$, $2_2$, $2_3$), avec chacune des unités d'avance de cassette additionnelles (13) fonctionnant de façon à délivrer une cassette à bande (4) entre le bloc d'étagère de rangement de cassette adjacent ($1_1$) et le magnétoscope respectif.

5. Dispositif de chargement de cassette à bande automatique selon l'une quelconque des revendications 1 à 4, dans lequel les moyens de table d'avance (161) comprennent une première plaque (174) et une deuxième plaque (180) disposées côte-à-côte et ayant des bords respectifs éloignés l'un de l'autre avec des rebords (175, 181) le long de ceux-ci et s'étendant parallèlement à la direction du déplacement latéral des moyens de table (161), la première plaque (174) pouvant coulisser vers et à l'écart de la deuxième plaque (180) à angle droit par rapport aux rebords (175, 181), des moyens de ressort (192, 193) destinés à pousser la première plaque en direction de la deuxième plaque, des moyens de verrouillage (194, 200) destinés à maintenir la première plaque à l'encontre du déplacement par les moyens de ressort (192, 193) dans une position de réception de cassette dans laquelle un cassette à bande (4) peut être reçue entre les rebords (175, 181), des moyens (184, 185) destinés à monter la deuxième plaque (180) afin de basculer entre une position relevée dans laquelle le rebord (181) sur la deuxième plaque peut être engagé avec une cassette (4) sur les première et deuxième plaques (174, 180) et une position renfoncée dans laquelle le rebord (181) sur la deuxième plaque (180) est dégagé d'une cassette (4), et des moyens (197) destinés à déplacer la deuxième plaque (180) vers la position renfoncée simultanément à la libération des moyens de verrouillage (200) de telle sorte que les moyens de ressort (192, 193) déchargent une cassette de la table d'avance (161) en déplaçant la première plaque (174) vers la deuxième plaque (180) alors que la deuxième plaque est basculée vers la position renfoncée.

6. Dispositif de chargement de cassette à bande automatique selon la revendication 5, dans lequel les moyens de verrouillage (200) comprennent un levier d'actionnement pivotant (194) ayant une butée (200) pouvant être engagée à l'avant d'une saillie (199) sur la première plaque (174) dans la position de réception de cassette, et les moyens destinés à déplacer la deuxième plaque (180) comprennent un élément de came (135) relié au levier d'actionnement (194) et pouvant être engagé par en dessus par la deuxième plaque (180) afin de maintenir la deuxième plaque (180) dans la position relevée lorsque la butée (200) engage la saillie (199) et pour permettre le basculement de la deuxième plaque (180) vers la position renfoncée lorsque le levier d'actionnement (194) est pivoté de façon à désengager la butée (200) de la saillie (199).

7. Dispositif de chargement de cassette à bande automatique selon la revendication 6, dans lequel chacun des dispositifs de transfert de cassette (10) comporte un élément de transfert (17) définissant un passage de transfert de cassette (15, 16) ouvert à ses extrémités, et des moyens destinés à propulser une cassette (4) hors du passage (15, 16) et sur la première plaque (174) des moyens de table d'avance (161) alors que la deuxième plaque (180) est dans la position renfoncée de telle sorte que la cassette propulsée (4) agit contre le rebord (175) sur la première plaque (174) pour pousser la première plaque (174) vers la position de réception de cassette; et dans lequel les moyens de table d'avance (161) comportent en outre des moyens (197) destinés à pousser le levier d'actionnement (194) à se déplacer dans la direction d'engagement de la butée (200) en avant de la saillie (199) lorsque la première plaque (174) est déplacée vers la position de réception de cassette par la cassette propulsée (4).

8. Dispositif de chargement de cassette à bande automatique selon la revendication 7, dans lequel le bloc de logement (3) de magnétoscope (2₁, 2₂, 2₃) comporte en outre des moyens d'entrée et de sortie de cassette (227) interposés entre chacun des magnétoscopes et l'unité d'avance de cassette additionnelle respective (13) et pouvant fonctionner de manière sélective afin de propulser une cassette (4) à travers dans la direction de l'unité d'avance de cassette additionnelle respective (13) vers le magnétoscope respectif pour chargement dans les magnétoscopes (2₁, 2₂, 2₃) et afin de propulser une cassette (4) éjectée du magnétoscope respectif à travers les moyens d'entrée et de sortie de cassette (227) en direction de l'unité d'avance de cassette additionnelle respective (13) pour réception par les moyens de table d'avance (161) de l'unité d'avance de cassette additionnelle (13).

9. Dispositif de chargement de cassette à bande automatique selon la revendication 9, dans lequel les moyens d'entrée et de sortie de cassette (227) comportent des moyens de galet d'entraînement (243) disposés sous une trajectoire de la cassette à bande (4) entre l'unité d'avance respective (13) et les magnétoscopes (2₁, 2₂, 2₃), des moyens (235) supportant les moyens de galet d'entraînement (243) pour des déplacements verticaux vers et à l'écart de la trajectoire, des moyens de ressort (238) destinés à pousser les moyens de galet d'entraînement (243) vers le haut contre la surface inférieure d'une cassette (4) dans la trajectoire, des premiers moyens de moteur inversible (246) destinés à entraîner en rotation les moyens de galet d'entraînement (243), un arbre rotatif (239) s'étendant en travers de la trajectoire au-dessus des moyens de galet d'entraînement (243), des bras radiaux (242) fixés à l'arbre (229) afin de tourner l'arbre (229) entre une position relevée de repos au-dessus de la trajectoire et une position abaissée interposée dans la trajectoire, des moyens de came (249) fixés à l'arbre (229) afin de commander la position verticale des moyens de galet d'entraînement (243) en fonction de la rotation de l'arbre (229), et des seconds moyens de moteur inversible (245) destinés à faire tourner l'arbre (229).

10. Dispositif de chargement de cassette à bande automatique selon la revendication 10, dans lequel les moyens d'entrée et de sortie de cassette (227) comportent en outre un élément d'indication de position (255) tournant avec l'arbre (229) et des moyens de capteur (258, 259, 260) détectant l'élément d'indication de position (255) dans plusieurs positions de rotation des bras (242) et destinés à commander les premiers et seconds moyens de moteur (245, 246).

**Patentansprüche**

1. Automatische Bandkassettenladevorrichtung, mit

   einer Vielzahl von Kassettenaufbewahrungsfächer-Blöcken (1₁, 1₂, 1₃), die Seite an Seite aneinandergrenzend angeordnet sind und wovon jeder eine Vielzahl von Kassettenaufbewahrungsfächern (5) enthält, um betreffende Bandkassetten (4) darin aufzunehmen,

   Kassettentransportvorrichtungen (10), wovon jede einem der Kassettenaufbewahrungsfächer-Blöcke (1₁, 1₂, 1₃) zugeordnet ist, um wahlweise eine Bandkassette (4) in ein Kassettenaufbewahrungsfach (5) des betreffenden Kassettenaufbewahrungsfächer-Blocks einzulegen oder diesem zu entnehmen und um jede entnommene Bandkassette (4) innerhalb eines Bereiches, der der Ausdehnung des betreffenden Kassettenaufbewahrungsfächer-Blocks entspricht, zu transportieren,

   einem VTR-Gehäuseblock (3), der angrenzend an ein Ende der Seite-an-Seite-Anordnung der Kassettenaufbewahrungsfächer-Blöcke (1₁, 1₂, 1₃) montiert ist und zumindest einen VTR (2₁) enthält, um zumindest Signale wiederzugeben, die in einer Bandkassette (4) aufgezeichnet vorliegen, welche von einem der Kassettenaufbewahrungsfächer-Blöcke (1₁, 1₂, 1₃) zugeführt ist, und

   einer Kassettenliefereinheit (11), die zwischen jeweils zwei der Seite an Seite aneinandergrenzenden Kassettenaufbewahrungsfächer-Blöcke (1₁, 1₂, 1₃) vorgesehen ist und wirksam ist, um eine Bandkassette (4) von einer zu einer anderen der Kassettentransportvorrichtungen (10) zu liefern, die den aneinandergrenzenden Kassettenaufbewahrungsfächer-Blöcken (1₁, 1₂, 1₃) zugeordnet sind,

   dadurch **gekennzeichnet,**

   daß die Kassettenliefereinheit (11) einen Zuführtisch (161) enthält, der seitlich zwischen ersten und zweiten Positionen verschiebbar ist, die jeweils innerhalb der zugeordneten

Kassettenaufbewahrungsfächer-Blöcke ($1_1$, $1_2$, $1_3$) liegen, wobei die Zuführtische (161) in jeder dieser Positionen wirksam sind, um eine Bandkassette (4) aufzunehmen und abzugeben, und wobei die erste Position im wesentlichen die Position eines der Kassettenaufbewahrungsfächer (5) in einem ersten der aneinandergrenzenden Kassettenaufbewahrungsfächer-Blöcke ($1_1$, $1_2$, $1_3$) besetzt und die zweite Position im wesentlichen die Position eines der Kassettenaufbewahrungsfächer (5) in einem zweiten der aneinandergrenzenden Kassettenaufbewahrungsfächer-Blöcke ($1_1$, $1_2$, $1_3$), der dem ersten benachbart ist, besetzt, und

daß eine zusätzliche Kassettenliefereinheit (13) zwischen dem VTR ($2_1$) und dem Kassettenaufbewahrungsfächer-Block ($1_1$), der diesem benachbart ist, vorgesehen ist und wirksam ist, um eine Bandkassette zwischen dem benachbarten Kassettenaufbewahrungsfächer-Block ($1_1$) und dem VTR ($2_1$) zu transportieren.

2. Automatische Bandkassettenladevorrichtung nach Anspruch 1, bei der die Kassettenaufbewahrungsfächer-Blöcke ($1_1$, $1_2$, $1_3$) zwei Aufbewahrungsfächerabschnitte (6, 7) enthalten, wobei jeder davon betreffende der Kassettenaufbewahrungsfächer (5) enthält und wobei sie in einem Abstand voneinander angeordnet sind, um einen Durchgang zwischen den Aufbewahrungsfächerabschnitten (6, 7) zu definieren, durch den die betreffende Kassettentransportvorrichtung (10) bewegbar ist.

3. Automatische Bandkassettenladevorrichtung nach Anspruch 2, bei der einer (6) der Aufbewahrungsfächerabschnitte (6, 7) jedes der Kassettenaufbewahrungsfächer-Blöcke ($1_1$, $1_2$, $1_3$) Öffnungen (8, 9) hat, die von dem Durchgang abgewandt sind und mit zumindest einigen der Kassettenaufbewahrungsfächer (5) in einem Aufbewahrungsfächerabschnitt (6) in Verbindung stehen, um ein Einlegen und Herausnehmen der Bandkassetten durch die Öffnungen (8, 9) von Hand zu gestatten, und bei der jede der Kassettentransportvorrichtungen (10) wirksam ist, um Kassetten zwischen den Kassettenaufbewahrungsfächern (5), die mit den Öffnungen (8, 9) in Verbindung stehen, und anderen Kassettenaufbewahrungsfächern (5) in dem einen Aufbewahrungsfächerabschnitt (6) und in dem anderen (7) der zwei Aufbewahrungsfächerabschnitte (6, 7) des betreffenden Kassettenaufbewahrungsfächer-Blocks zu transportieren.

4. Automatische Bandkassettenladevorrichtung nach einem der Ansprüche 1 bis 3, bei der der Videomagnetbandrecorder-Gehäuseblock (3) eine Vielzahl von Videomagnetbandrecordern ($2_1$, $2_2$, $2_3$) beinhaltet, wovon einer über dem anderen angeordnet ist, und bei der für jeden der Videomagnetbandrecorder ($2_1$, $2_2$, $2_3$) eine der zusätzlichen Kassettenliefereinheiten (13) vorgesehen ist, wobei jede der zusätzlichen Kassettenliefereinheiten (13) wirksam ist, um eine Bandkassette (4) zwischen dem benachbarten Kassettenaufbewahrungsfächer-Block ($1_1$) und dem betreffenden VTR zu transportieren.

5. Automatische Bandkassettenladevorrichtung nach einem der Ansprüche 1 bis 4, bei der der Zuführtisch (161) enthält: eine erste Platte (174) und eine zweite Platte (180), die Seite an Seite angeordnet sind und betreffende Ränder, die entfernt voneinander liegen, mit längs diesen ausgebildeten Bordrändern (175, 181) aufweisen und sich parallel zu der Richtung der seitlichen Verschiebung des Zuführtisches (161) erstrecken, wobei die erste Platte (174) in Richtung auf die zweite Platte (180) und fort von dieser unter rechten Winkeln zu den Bordrändern (175, 181) verschiebbar ist, Federn (192, 193) zum Treiben der ersten Platte in Richtung auf die zweite Platte, Verriegelungsmittel (194, 200), um die erste Platte gegen die Bewegung durch die Feder (192, 193) zu halten, Mittel in einer Kassettenaufnahmeposition, in der eine Bandkassette (4) zwischen den Bordrändern (175, 181) aufgenommen werden kann, Mittel (184, 185) zum Anbringen der zweiten Platte (180) derart, daß sie sich zwischen einer angehobenen Position, in welcher der Bordrand (181) auf der zweiten Platte in eine Bandkassette (4) auf den ersten und zweiten Platten (174, 180) eingreifen kann, und einer niedergedrückten Position, in welcher der Bordrand (181) auf der zweiten Platte (180) von einer Bandkassette (4) gelöst ist, hin- u. herzubewegen ist, und ein Mittel (197), um die zweite Platte (180) zu der niedergedrückten Position gleichzeitig mit der Lösung des Verriegelungsmittels (200) zu bewegen, so daß die Federn (192, 193) eine Bandkassette von dem Zuführtisch (161) durch Bewegen der ersten Platte (174) in Richtung auf die zweite Platte (180), während die zweite Platte in die niedergedrückte Position bewegt wird, ausgeben.

6. Automatische Bandkassettenladevorrichtung nach Anspruch 5, bei der das Verriegelungsmittel (200) einen schwenkbar angebrachten Betätigungshebel (194) enthält, auf dem ein Anschlag (200) sitzt, der in der Kassettenaufnahmeposition auf der Vorderseite mit einer Nase (199) auf der ersten Platte (174) in Eingriff treten kann, und bei der das Mittel zum Bewegen der zweiten Platte (180) einen Mitnehmer (135) enthält, der mit dem Betätigungshebel (194) verbunden ist und von oben mit der zweiten Platte (180) zum Halten der zweiten Platte (180) in der angehobenen Position in Eingriff treten kann, wenn der Anschlag (200) mit der Nase (199) in Eingriff tritt, und zum Gestatten eines Bewegens der zweiten Platte (180) in Richtung auf die niedergedrückte Position, wenn der Betätigungshebel (194) geschwenkt wird, um den Anschlag (200) außer Eingriff mit der Nase (199) zu bringen.

7. Automatische Bandkassettenladevorrichtung nach Anspruch 6, bei der jede der Kassettentransportvorrichtungen (10) ein Transportmittel (17), das einen Kassettenaufnahmekanal (15, 16) definiert, der an seinen Enden offen ist, und Mittel enthält zum Bewegen einer Bandkassette (4) aus dem Kanal (15, 16) und auf die erste Platte (174) des Zuführtisches (161), während sich die zweite Platte (180) in der niedergedrückten Position befindet, so daß die bewegte Bandkassette (4) gegen den Bordrand (175) auf der ersten Platte (174) wirkt, um die erste Platte (174) in die Kassettenaufnahmeposition zu zwingen, und bei der der Zuführtisch (161) ferner ein Mittel (197) zum Treiben des Betätigungshebels (194) zum Bewegen desselben in der Richtung enthält, in der er den Anschlag (200) auf der Vorderseite mit der Nase (199) in Eingriff treten läßt, wenn die erste Platte (174) durch die bewegte Bandkassette (4) in die Kassettenaufnahmeposition bewegt wird.

8. Automatische Bandkassettenladevorrichtung nach Anspruch 7, bei der der VTR-Gehäuseblock (3) zur Aufnahme der VTR's ($2_1$, $2_2$, $2_3$) ferner ein Kassetteneingabe- und -ausgabemittel (227) enthält, das zwischen jedem der VTR's und der betreffenden zusätzlichen Kassettenliefereinheit (13) angeordnet ist und wirksam ist, um selektiv eine Bandkassette (4) durch dieses in Richtung von der betreffenden zusätzlichen Kassettenliefereinheit (13) zu dem betreffenden VTR zum Laden in den VTR ($2_1$, $2_2$, $2_3$) zu bewegen und um eine Bandkassette (4), die von dem betreffenden VTR ausgestoßen ist, durch das Kassetteneingabe- und -ausgabemittel (227) in Richtung auf die betreffende zusätzliche Kassettenliefereinheit (13) zur Aufnahme durch den Zuführtisch (161) der zusätzlichen Kassettenliefereinheit (13) zu bewegen.

9. Automatische Bandkassettenladevorrichtung nach Anspruch 8, bei der das Kassetteneingabe- und -ausgabemittel (227) enthält: eine Antriebsrolle (243), die unterhalb eines Weges der Bandkassette (4) zwischen der betreffenden Kassettenliefereinheit (13) und dem VTR ($2_1$, $2_2$, $2_3$) angeordnet ist, ein Mittel (235), das die Antriebsrolle (243) für vertikale Bewegungen in Richtung auf den Weg oder von diesem fort hält, eine Feder (238), um die Antriebsrolle (243) aufwärts gegen die Bodenfläche einer Bandkassette (4) in dem Weg zu drücken, einen ersten umsteuerbaren Motor (246) zum Drehen der Antriebsrolle (243), eine drehbare Welle (229), die sich quer über den Weg oberhalb der Antriebsrolle (243) erstreckt, radiale Arme (242), die an der Welle (229) befestigt sind, zum Drehen mit der Welle (229) zwischen einer angehobenen unwirksamen Position oberhalb des Weges und einer abgesenkten Position, die in dem Weg liegt, ein Nockenelement (249), das an der Welle (229) befestigt ist, zum Steuern der vertikalen Position der Antriebsrolle (243) in Übereinstimmung mit der Drehung der Welle (229), und einen zweiten umsteuerbaren Motor (245) zum Drehen der Welle (229).

10. Automatische Bandkassettenladevorrichtung nach Anspruch 9, bei der das Kassetteneingabe- und -ausgabemittel (227) ferner ein Positionsanzeigeelement (225), das sich mit der Welle (229) dreht, und Sensorelemente (258, 259, 260) enthält, die die Position des Positionsanzeigeelements (255) in verschiedenen Drehpositionen der Arme (242) erfassen und zum Steuern des ersten und des zweiten Motors (245, 246) dienen.

FIG.1

FIG.2

FIG.3

25

FIG.4

FIG.5

FIG.6

FIG.7

27

FIG.8

FIG.9

EP 0 227 446 B1

FIG.10

FIG. 12

30

FIG. 11

FIG. 13

FIG.14

FIG. 15

FIG. 16

FIG. 17

FIG.18A

FIG.18B

FIG. 18C

FIG. 18D

FIG. 18E

FIG. 19

EP 0 227 446 B1

FIG.20

EP 0 227 446 B1

FIG.21

FIG.22

FIG.23

FIG.24A

EP 0 227 446 B1

FIG.24B

FIG.25

FIG.26

EP 0 227 446 B1

EP 0 227 446 B1

FIG.27

FIG.28

48

FIG.29

FIG.30

FIG.31

FIG.32

FIG.35

FIG.33

FIG.34